# EUROPEAN PATENT SPECIFICATION

(11) **EP 0 685 842 B1**
(45) Date of publication and mention of the grant of the patent: **12.12.2001**
(21) Application number: 95108335.1
(22) Date of filing: 31.05.1995
(51) Int. Cl.: G11B 17/22

(54) **Auto disc changer**
Automatischer Plattenwechsler
Changeur automatique de disque

(30) Priority: 01.06.1994 JP 12042394
(43) Date of publication of application: 06.12.1995
(73) Proprietor: AIWA CO., LTD., Taito-ku, Tokyo 110 (JP)
(72) Inventor: Takashi, Ando, Tochigi 320 (JP); Shoji, Komatsuzaki, Tochigi 320 (JP); Ayumu, Konno, Tochigi 321-43 (JP); Shigeki, Sugano, Tochigi 321 (JP); Takumi, Usui, Tochigi 320 (JP)
(74) Representative: Riebling, Peter, Dr.-Ing.

(56) References cited:
- EP-A- 0 286 770
- EP-A- 0 294 884
- EP-A- 0 306 667
- EP-A- 0 541 213
- EP-A- 0 607 895
- WO-A-93/11535
- DE-A- 4 017 633
- DE-A- 4 404 006
- GB-A- 2 266 617
- US-A- 4 462 742
- US-A- 5 065 265
- PATENT ABSTRACTS OF JAPAN vol. 018, no. 315 (P-1755), 15 June 1994 & JP-A-06 068581 (AIWA CO LTD), 11 March 1994,
- PATENT ABSTRACTS OF JAPAN vol. 017, no. 220 (P-1529), 30 April 1993 & JP-A-04 355255 (SONY CORP), 9 December 1992,

## Description

### BACKGROUND OF THE INVENTION

### FIELD OF THE INVENTION

The present invention relates to an auto disc changer which can store a large number of audio discs and play the discs one at a time.

### DESCRIPTION OF THE RELATED ART

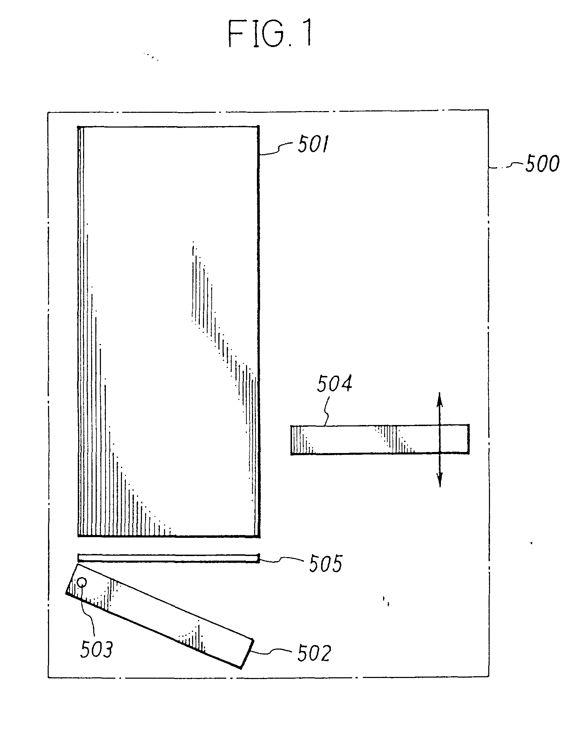

In general, a typical auto disc changer 500 shown in FIG. 1 stores a number of discs (not shown) in a stocker 501, draws out a single disc from the stocker using a carriage 504, and transfers the disc to a position on the player 502 for playback. When exchanging discs, one disc is taken out of the stocker and a new disc is placed into the stocker 501 by using a disc tray (not shown) which moves backwards and forwards.

When storing a disc in the auto disc changer, a user sets the disc on the opened disc tray. The disc tray closes and transfers the disc to the carriage 504. The carriage 504 moves to the stocker 501 position and loads the disc into the stocker 501. When the user wishes to exchange discs, the carriage 504 draws out the disc from the stocker 501 and transfers it to the disc tray. The user opens the disc tray, takes out the disc and sets another disc onto it. The new disc is then stored in the stocker 501 in the same way the previous disc was stored.

However, because it is necessary to move the player 502 up and down with the auto disc changers 500 currently in use, the construction of the auto disc changer is complicated, and the device is relatively large and expensive. Further, since the player 502 is not completely fixed, the playback operation may become unstable.

Typically, when the auto disc changer 500 described above is turned on, an initializing operation is performed to determine that the carriage 504 and the optical pickup of the player 502 are properly positioned. Further, when the carriage 504 moves in order to store the disc, it does not thereafter return to an initializing position, but remains in a standby mode at the position where the storage operation was completed.

Thus, in the event the user wishes to play the disc stored at the highest position of the stocker 501 and the carriage 14 is in a standby position at the bottom of the stocker 501, the carriage 504 must move a long distance, taking a great deal of time. Further, in order to detect the position of the carriage 504 when the carriage 504 is in a standby position, slits or other such devices, are built into all of the disc storage compartments of the stocker 501, together with a sensing device. This leads to an increase in the number of the parts used and complicates control, all of which results in increased cost.

With the auto disc changers 500 currently in use, the position of the carriage 504 is set at a predetermined reference position in order to adjust for differences in position brought about for various reasons after the carriage 504 has moved over a period of time. In other words, the position of the carriage 504 is periodically adjusted by moving it to the reference position.

However, the reference position in the prior art has been set at a position through which the carriage 504 does not pass during normal operation, for example, at a specific position below the playback position. Accordingly, in order to move the carriage 504 back to the reference position, it is necessary to move it outside of the normal operating range, causing such problems as the loss of time during such adjustments of position and the increase in the size of the unit because the moving range of the carriage 504 is increased.

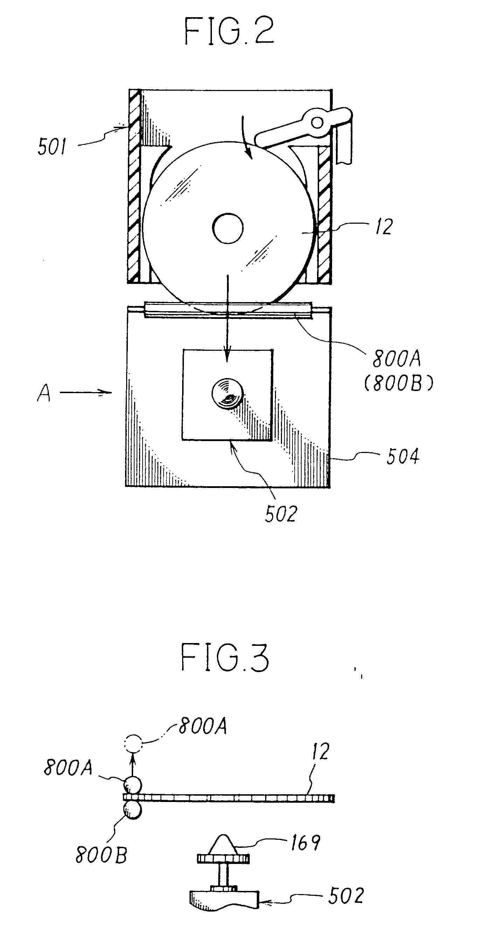

As shown in FIG. 2, the auto disc changers 500 currently in use have rollers 800A and 800B for holding the disc 12 and for transferring it, for example, to the carriage 504. These make it possible to load and remove the disc 12 into and out of the stocker 501. However, such disc loading and removing mechanism needs rollers 800A and 800B which are longer than the diameter of the disc 12, and when the disc 12 is set on the turntable 169 of the player 502 as shown in FIG. 3, a mechanism for moving one of the rollers 800A off of the disc 12 is required. This also complicates the construction and makes the unit larger.

With the disc trays currently in use, the disc is placed in a predetermined position by holding the disc with a flat spring. However, because the upper side of the disc is not held securely in position, the disc rattles when the disc tray opens and closes, and it is possible for the disc to slide off the storage position accidentally.

Further, the internal opening for the disc tray shown in FIG. 1 is positioned at the rear disc tray, facing the carriage 504 for the disc storage portion, in order to allow disc loading and removal to and from the carriage 504. In order to prevent the disc from sliding off when the disc tray is being opened or closed, a stopper which can be opened and closed is positioned at such internal opening. In general, such stopper is always held in the closed position, by a spring for example, and when the disc is being loaded into or removed from the carriage 14, the stopper is retracted by a appropriate opening means, so that the disc can move through such opening.

However, because this spring is only biased in the closed position, when the disc tray opens and a disc is put onto the tray, the top of the disc comes in contact with the stopper. If a force greater than a specified force is applied to it, it is possible for the stopper to open and for the disc to fall accidentally into the inner part of the disc tray or into some other area.

The document WO-A-93/11535 discloses an auto disc changer comprising a pair of disc storage means which are opposed to each other, disc removing and loading means, disc playing means and disc carriage means. The disc carriage means moves up and down in a space between the disc storage means. The disc case is transferred from the disc storage means to the empty disc storage means by making the disc case horizontally moved by using an extraction device installed inside the disc carriage means. The disc case containing the disc is transferred and mounted onto the disc carriage means by the extraction device positioned in the standby position. In the other words, the disc carriage means lifts up to a level of lift mechanism and then the disc case is transferred into the lift mechanism by the extraction device so that the disc is mounted on the lift mechanism. The lift mechanism moves downwardly under the off-center control of the motor driving, and thereby the disc is mounted on the disc playing means.

From the document EP-A-0 541 213 which is considered to represent the closest prior art a position detecting apparatus for detecting the position of a movable transport unit is known. The transport unit is used to transport a recording medium (disc) along a track serving a storage container and a playback unit. The position detecting apparatus reliably detects the position of the transport unit by accumulating binary coded signals output as a position count by the position detecting means, and determining the position count as a valid indication of the position of the transport unit when the number of the position count corresponds to the level of the signal generated by a pulse train generating means. In case the position count is found to be not valid, the transport unit has to be moved to a predetermined position where the position count is reset to a value corresponding to that predetermined position. Thus, there might be a time lost and an unnecessary movement of the transport unit each time the transport unit has to be moved to the predetermined position in order to reset the position count.

### OBJECT AND SUMMARY OF THE INVENTION

One of the objects of the present invention is to provide an improved auto disc changer the construction of which is simpler, requires less space, and is less expense, and which makes the playback operation more stable.

Another object of the present invention is to provide an improved auto disc changer which can decrease the number of parts used, making control simpler and lowering costs.

A further object of the present invention is to provide an improved auto disc changer which can eliminate time lost when adjusting the position of the carriage with respect to a certain reference position and which can shorten the moving range of the carriage so that the whole unit can be built smaller.

These objects are achieved by providing an auto disc changer according to claim 1.

The auto disc changer according to the present invention is comprised of a disc storage means (stocker) for storing a number of discs, a disc removing and loading means (disc tray) for removing said discs from and loading said discs into the auto disc changer, the disc player means (a player) for playing back the disc, a disc carriage means (carriage) having modes for transporting the disc between the disc storage means, the disc removing and loading means and the playing means, and driving means for driving the disc carriage means, whereby a reference position for the disc carriage means is positioned within a range of movement through which the disc carriage means must pass in every mode in which the disc carriage means moves, and a number of pulses supplied to the driving means are cleared at the reference position so that the position of the disc carriage means is adjusted to the reference position in each mode.

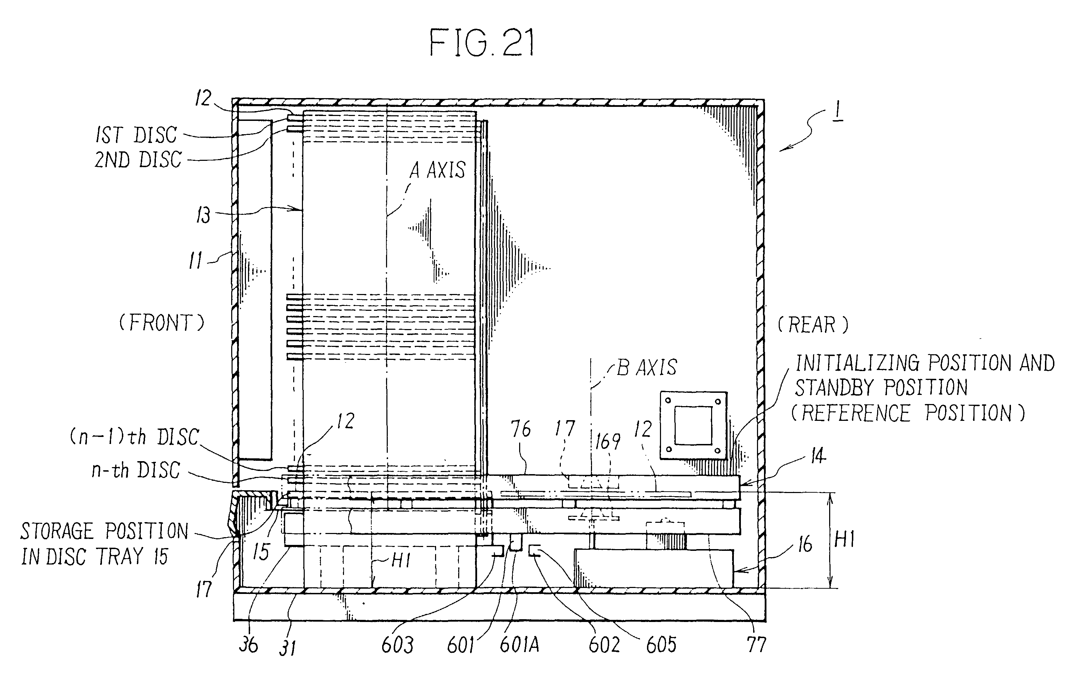

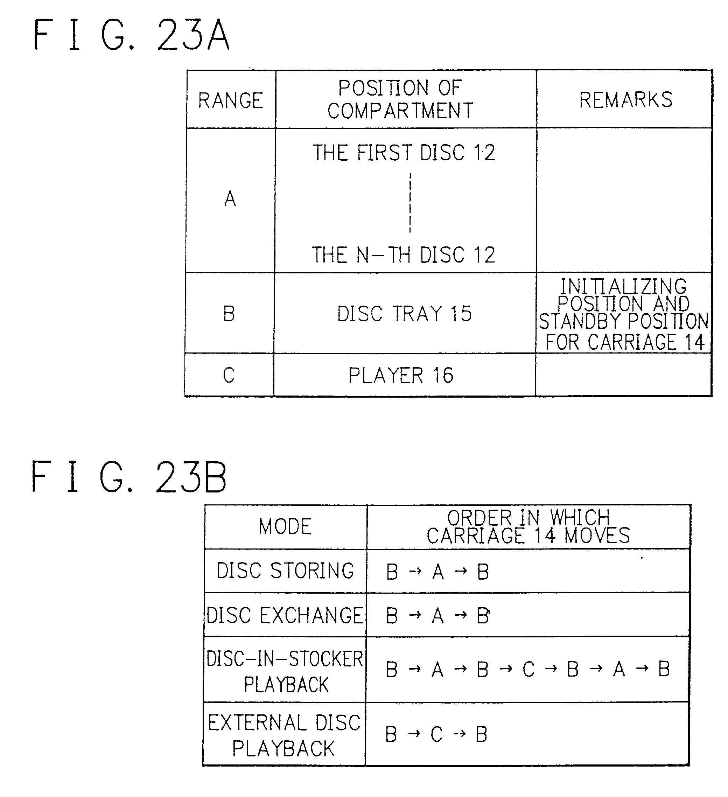

As shown in FIG. 21, the disc tray 15 is positioned between the stocker 13 and the player 16, and the reference position for the carriage 14 is set so that the disc 12 stored in the carriage 14 is set at the same height (in this embodiment) as the disc 12 stored in the disc tray 15. As shown in FIG. 23B, in each type of operation, such as the disc storage mode, the disc removing mode, the disc-in-stocker playback mode, and the external disc playback mode, the carriage 14 passes through the position of the disc tray 15, in other words, the reference position in range B.

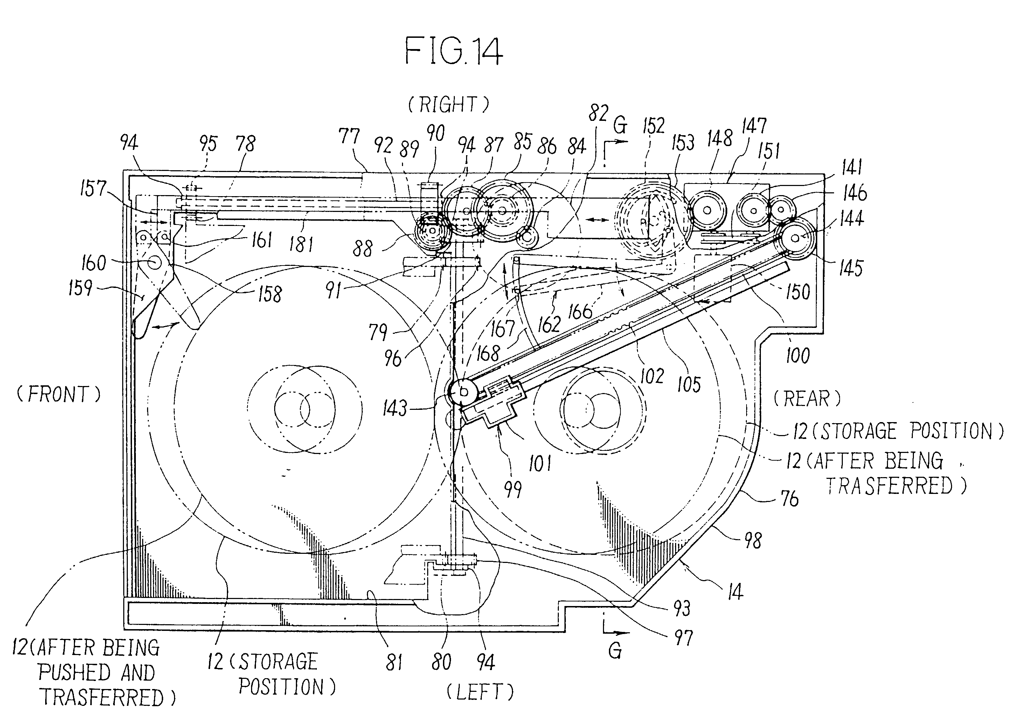

Accordingly, each time the carriage 14 passes such reference position, its position is adjusted with respect to such reference position. Even when the position of the carriage 14 is off due to the malfunction of a stepping motor 28 or a pulse counter shown in FIG. 14, the position can be adjusted immediately. Because it is unnecessary to move the carriage 14 outside of its normal moving range, the time otherwise required to move it to an outside reference position is saved and the range of movement is shortened, thereby allowing the unit to be built smaller.

In one embodiment of the present invention the disc removing and loading means is positioned between the disc playing means and the disc storage means. The reference position for the disc carriage means is set at a position where the disc is transferred to and from a disc area of the disc removing and loading means.

In a further embodiment, a disc setting portion of the disc playing means is set in accordance with the position of the disc area of the disc removing and loading means. The reference position for said the carriage means is set at a position where the disc is transferred to and from a disc area of the disc removing and loading means.

In another embodiment of the present invention the initializing position and the standby position of the disc carriage means during operation are set at the position where the removing and loading means is located and where the transferring of the disc occurs.

As shown in FIG. 21, with this auto disc changer 1, the initializing position and the standby position during operation are set at the position where the carriage 14 transfers the disc 12 to and from the disc tray 15 at the lower position of the stocker 13. In other words, the initializing position and the standby position for the carriage 14 is set so that the height H1 of the disc 12 stored in the disc tray 15 is the same height H1 as the disc 12 stored in the carriage 14.

Accordingly, because it is not necessary to repeatedly determine the position of the carriage 14, it is possible to decrease the number of the parts required, to make the control simpler, and to lower costs.

Additional objects and advantages of the present invention will be apparent from the following detailed description of a preferred embodiment thereof, which is best understood with reference to the accompanying drawings.

### BRIEF DESCRIPTION OF THE DRAWINGS

FIG. 1 is a simple cut-away view showing a construction of an auto disc changer 500 currently in use;
FIG. 2 is a view illustrating a disc removing and loading mechanism currently in use;
FIG. 3 is a view from arrow A of FIG. 2;
FIG. 4 is a cut-away view illustrating a construction of an auto disc changer 1 according to the present invention;
FIG. 5 is a frontal view of a preferred embodiment of the present invention;
FIG. 6 is a cross-sectional view from line A-A of FIG. 4;
FIG. 7 is a cross-sectional view from line B-B of FIG. 4;
FIG. 8 is a cross-sectional side view of a disc tray 15 according to the present invention;
FIG. 9 is a view from arrow C of FIG. 8;
FIG. 10 is a cross-sectional view from line D-D of FIG. 9;
FIG. 11 is a view showing a construction of a disc regulator 56 of the present invention (FIG. 11A shows the opened disc tray 15 and FIG. 11B shows the moving disc tray 15 and the disc 12 being moved);
FIG. 12 is a cross-sectional view from line E-E of FIG. 11;
FIG. 13 is a cross-sectional view of an opening and closing mechanism of a stopper 69 for the present invention (FIG. 13A shows the opened or moving disc tray 15 and FIG. 13B shows the closed disc tray 15);
FIG. 14 is a view showing a construction of the carriage 14 of the present invention;
FIG. 15 is a side view of a closed disc chuck 99 of the present invention;
FIG. 16 is a cross-sectional view from line F-F of FIG. 15;
FIG. 17 is a side view of a opened disc chuck 99 of the present invention;
FIG. 18 is a cross-sectional view from line G-G of FIG.14;
FIG. 19 is a top view of a cam groove 154 on the upper side of a cam 152 of the present invention;
FIG. 20 is the under side view of a cam groove 154 on an underside of a cam 152 of the present invention;
FIG. 21 is a side view showing a first example of an initializing position and a standby position for the carriage 14 and a reference position for the carriage 14 according to the present invention;
FIG. 22 is a diagram demonstrating an initializing operation 700 of the present invention;
FIG. 23 is a diagram showing a range and a demonstration of the way the carriage 14 moves, according to the present invention;
FIG. 24 is a diagram demonstrating an operation in a disc storage mode of the present invention;
FIG. 25 is a diagram demonstrating an operation in a disc exchange mode of the present invention;
FIG. 26 is a diagram demonstrating an operation in a disc-in-stocker playback mode of the present invention;
FIG. 27 is a diagram demonstrating an operation in an external disc playback mode of the present invention;
FIG. 28 is a view showing a ball clamp 172 of the present invention;
FIG. 29 is a side view showing a clamping condition of the ball clamp 172 of the present invention;
FIG. 30 is a side view showing a second example of an initializing position and a standby position of the carriage 14 of the present invention; and
FIG. 31 is a top view showing slidable directions of the disc trays 15 of the present invention.

### DESCRIPTION OF THE PREFERRED EMBODIMENT

An auto disc changer in a preferred embodiment according to the present invention is described below with reference to the drawings.

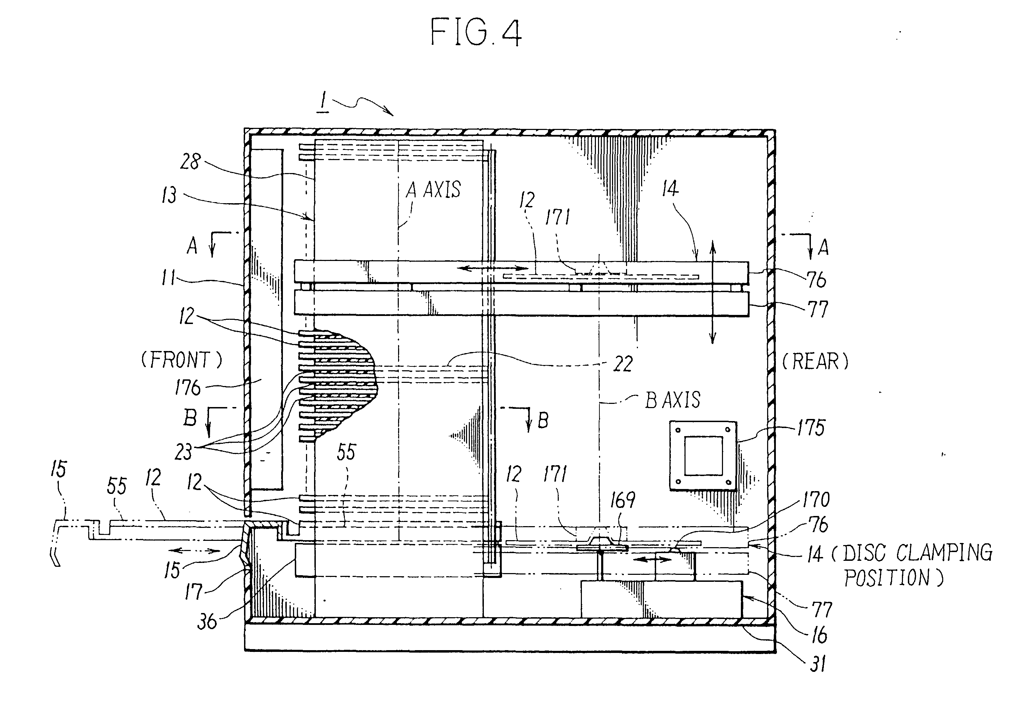

FIG. 4 illustrates an auto disc changer 1 according to the present invention. With the auto disc changer 1, a stocker 13 which is a means for stacking a number of discs vertically, is mounted in an approximately rectangular solid cabinet 11, and a carriage 14 which is a means for transferring discs 12 to the stocker 13, is positioned behind the stocker 13 and moves vertically. A disc tray 15 which is a means for removing and loading a disc out of and into the cabinet 11, is positioned below the stocker 13. A player 16 which is a means for playing a disc 12 is positioned behind the disc tray 15.

The discs 12 stored in the stocker 13 are arranged in a column with their centers on an A axis and when the disc tray 15 closes the disc 12 held in the disc tray 15 is also positioned with its center on such A axis. The carriage 14 moves parallel to the A axis as described below, and both the disc 12 in the carriage 14 and on the turntable 169 of the player 16 are positioned with their centers on a B axis which is parallel to the A axis.

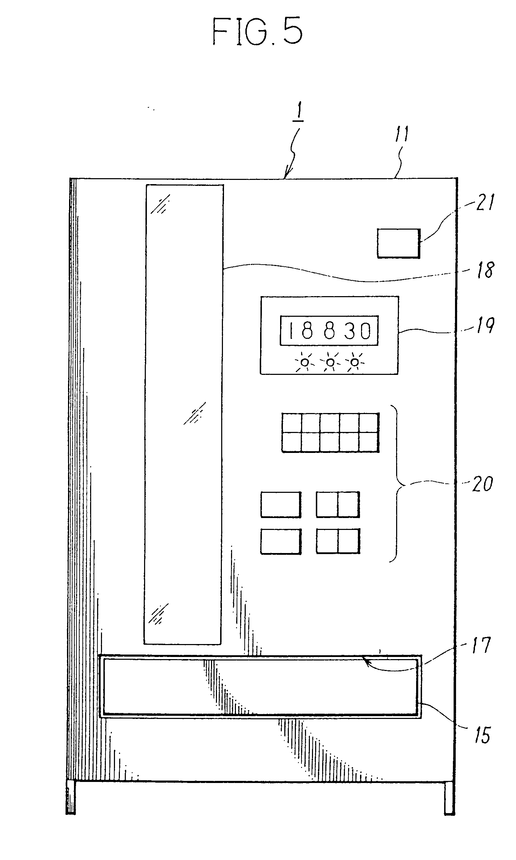

Referring to FIG. 5, an tray portal 17 is built into the lower portion of the front of the cabinet 11, and the disc tray 15 slides in and out of such portal. In addition, a transparent window 18 through which the user can observe the discs 12 stored inside, a display 19 for displaying disc numbers for the discs 12 stored and the disc 12 being played, various controls 20, and a power supply button 21 are built into the front of the cabinet 11. Inside the cabinet 11, a transformer 175 and a control unit 176 are mounted as shown in FIG. 4.

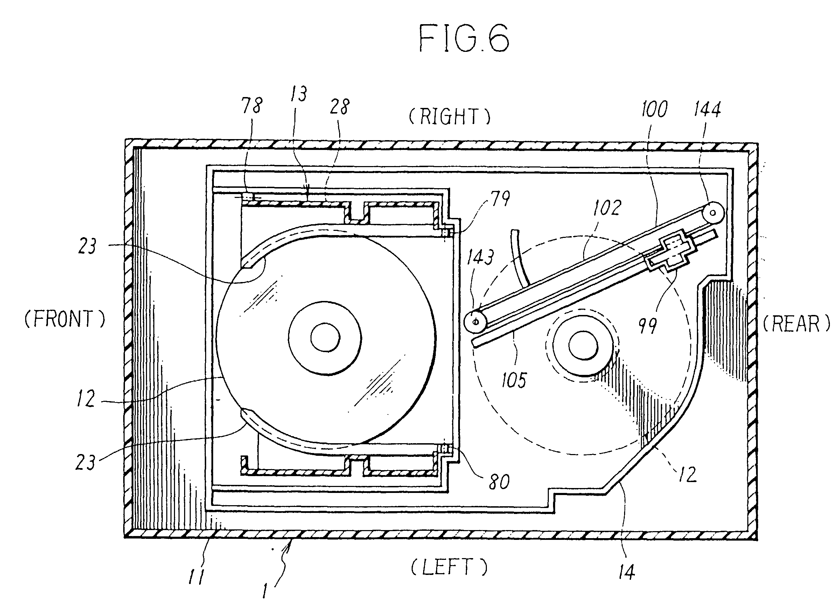

As shown in FIG. 4, a number of storage spaces for disc storage 22 are arranged vertically along the A axis in the stocker 13. The disc storage spaces 22 are partitioned off from each other by shelves 23 which are formed of thin plates, on which the discs 12 are placed for storage. As shown in FIG. 6, each shelf 23 is divided into two portions in order to hold the two opposite sides of the disc 12, and the fronts of the two portions are made from long strip-like plates which are curved to match the circumference of the disc 12.

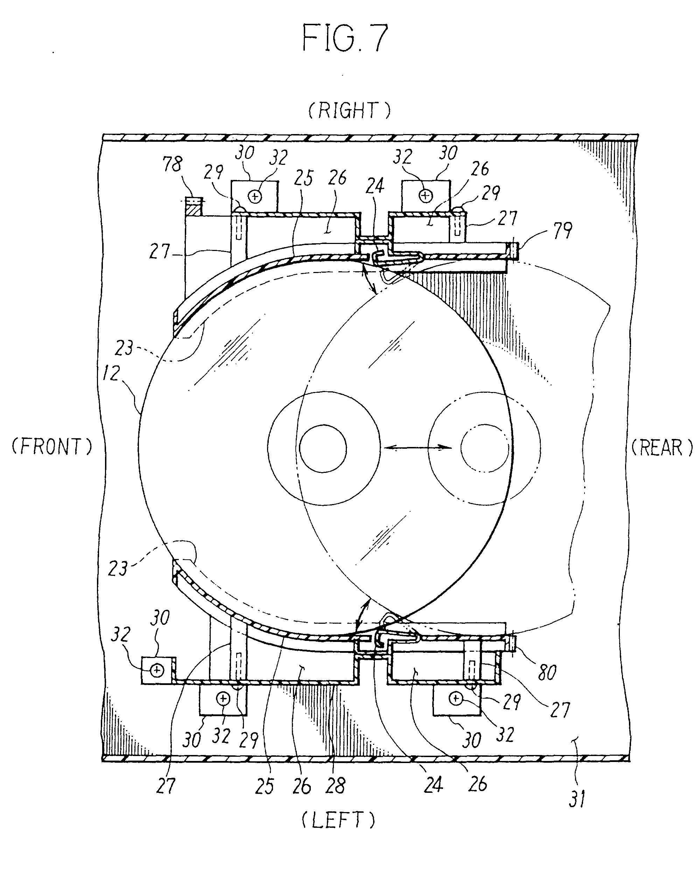

Referring to FIG. 7, flat springs 24 for holding the disc 12 inside the storage space 22 are attached to each shelf 23 of the stocker 13 in order to prevent the disc from accidentally falling from the shelf 23. The flat springs 24 are positioned behind the center of the stored disc 12 at an appropriate distance and hold the disc 12 inside between the two portions, the distance between which is shorter than the diameter of the disc 12. Accordingly, the disc 12 is held in position by being pressed toward the front edges of the portions of the shelves 23, the interval between which portions is narrow, and thus, all of the discs 12 are arranged along the A axis. Each shelf 23 projects from the side board 25, which is reinforced by ribs projected from the opposite side to the shelf 23. A column-shaped projection is formed on the side board 25 between the ribs 26 and is fixed to a support 28 with a screw 32. A leg 13 is formed on the lowermost edge of the support 28 and is firmly fixed to the base 31 with a screw 32. Racks 78, 79, and 80 are made on the outside of the stocker 13 in appropriate positions, at the front and back edges of the right side and the back edge of the left side in this embodiment, and are used when the carriage 14 moves.

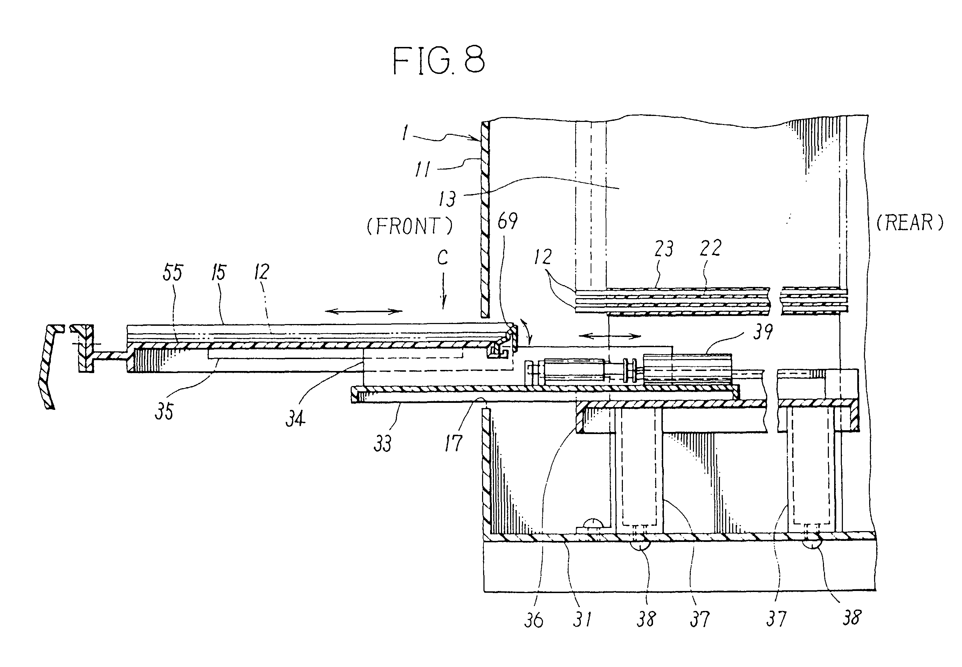

Referring to FIG. 4, the disc tray 15 is positioned under the disc storage spaces 22 of the stocker 13. The disc tray 15 is used when a disc 12 is placed into the stocker 13 through the carriage 14, when a disc 12 is taken out of the auto disc changer through the carriage 14, in a fashion similar to the operation of storing the disc 12 in the stocker 13, and when a disc 12 is loaded into the auto disc changer 1 to be played directly. The disc tray 15 is positioned above a middle tray 33 as shown in FIG. 8, and can move only forward and backward using the guide rail 34 for the middle tray 33 and the groove-shape guide 35 for the disc tray 15. Further, the middle tray 33 can move forward and backward on the fixed tray 36, using a proper guide means (not shown). The fixed tray 36 has legs 37, which are attached to the base 31 with screws 38.

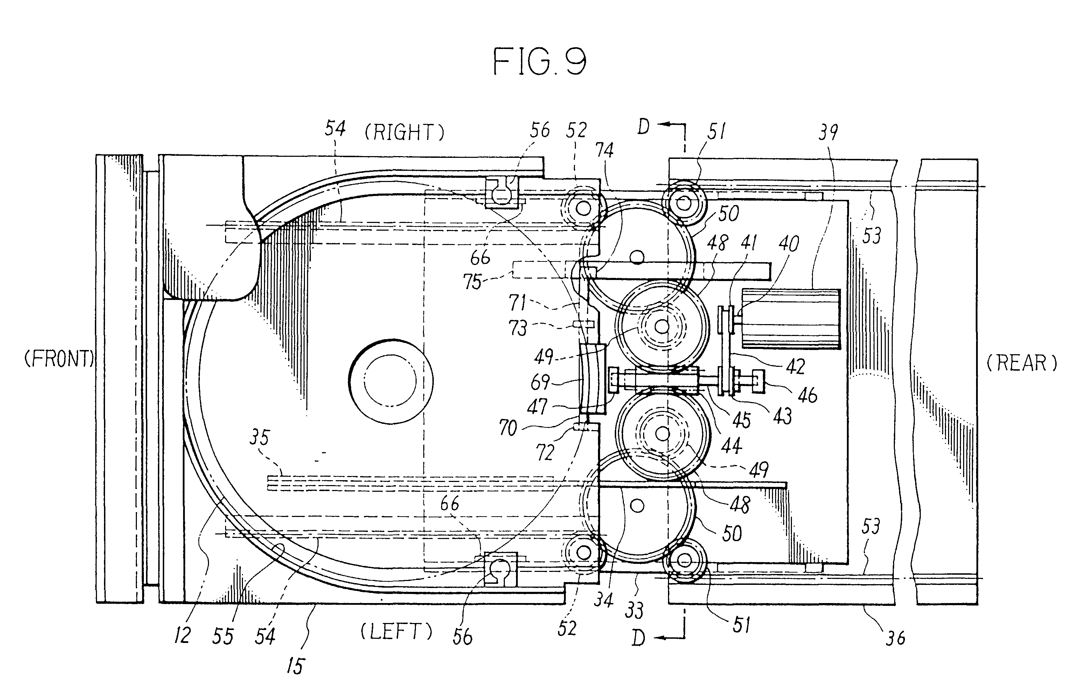

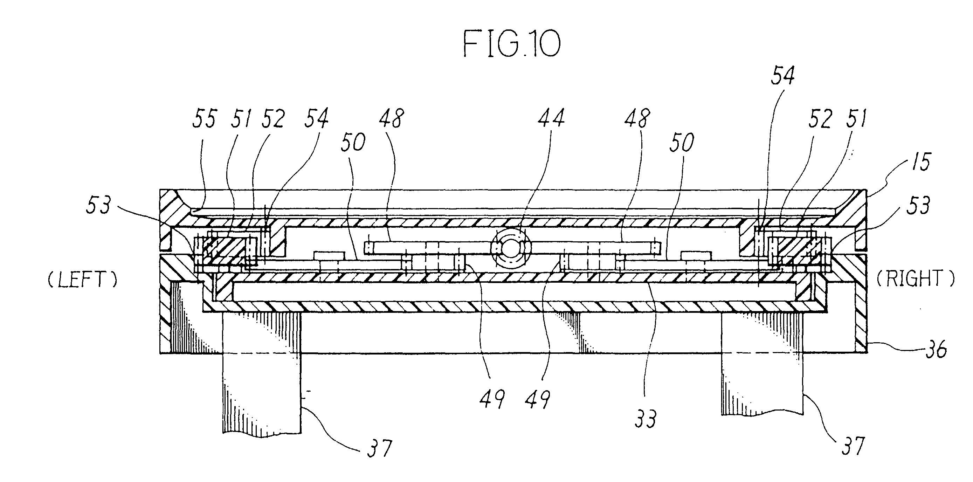

As shown in FIG. 9, a motor 39 is mounted on the upper side of the middle tray 33 near its rear, and the rotation of a shaft 40 on the middle tray 33 is transmitted via a pulley 41, a belt 42, and a pulley 43 to a worm 44. A pivot 45 of the worm 44 is held by bearings 46 and 47 onto the middle tray 33. The rotation of the worm 44 is transmitted via worm wheels 48 which are positioned at the right and left sides of the worm 44 and via first gears 49 and second gears 50 which are built onto the underside of the worm wheels 48 to first pinions 51 and second pinions 52. Additionally, as shown in FIG. 10, racks 53 which extend from the front to the rear are formed on the right and left insides of the fixed tray 36 and gear with the first pinions 51. Racks 54 which extend from the front to the back are formed on the right and left sides of the disc tray 15, and gear with the second pinions 52.

When the motor 39 is rotated, the right and left worm wheels 48 are rotated in directions opposite to each other as are the right and left first pinions 51. Therefore, the middle tray 33 can move forward or backward. Simultaneously, the right and left second pinions 52 are rotated in directions opposite to each other and the disc tray 15 moves forward or backward. Since the first pinion 51 and the second pinion 52 on the same side are rotated in the same direction, the middle tray 33 and the disc tray 15 move simultaneously in the same direction. This makes it possible to lengthen the distance which the disc tray 15 can move. FIG. 8 illustrates a situation in which the disc tray 15 is opened and the area 55 where the disc 12 is placed is clearly exposed outside the cabinet 11, making it easy to place or remove a disc 12. As shown in FIG. 4, when the disc tray 15 closes, the disc 12 placed in the disc area 55 is positioned with its center on the same A axis as the discs 12 which have already been stored.

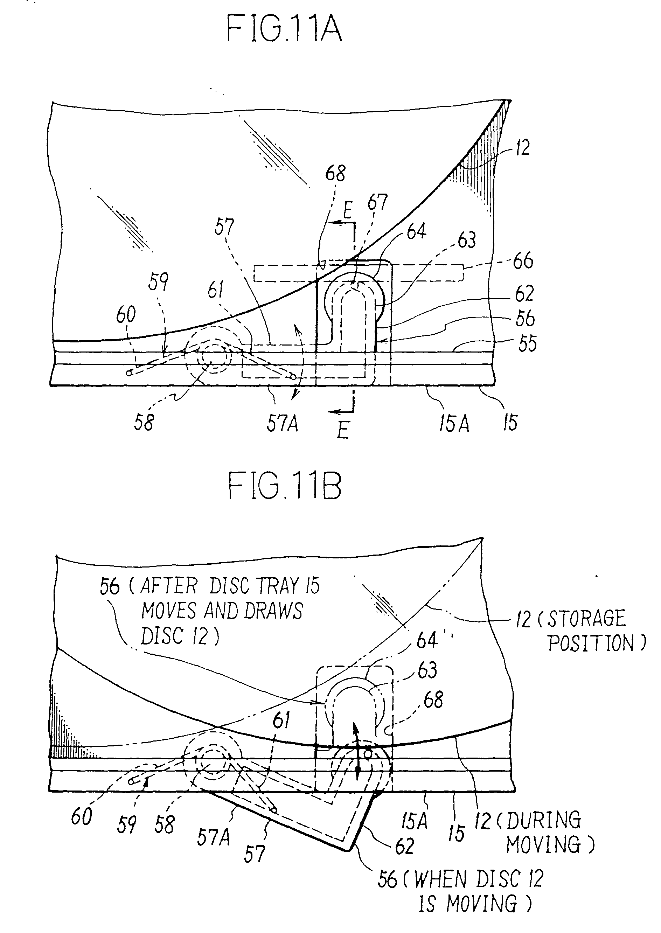

As shown in FIG. 9, disc regulators 56 for regulating the disc 12 at a predetermined position are positioned on the right and left side of the disc area 55 of the disc tray 15. The disc regulators 56 are positioned near the rear at a predetermined distance from the center of the disc 12, and are formed into approximately L-shapes as shown in FIG. 11. The top of a longer side portion 57 of the disc regulator 56 is attached rotatably to a shaft 58 which projects from the underside of the disc tray 15. A coiled spring 59 is wound around the shaft 58. One end 60 of the coiled spring 59 is hooked to the disc tray 15 and the other end 61 is hooked to the longer side portion 57. Accordingly, a short side portion 62 of the disc regulator 56 is always biassed toward the inside.

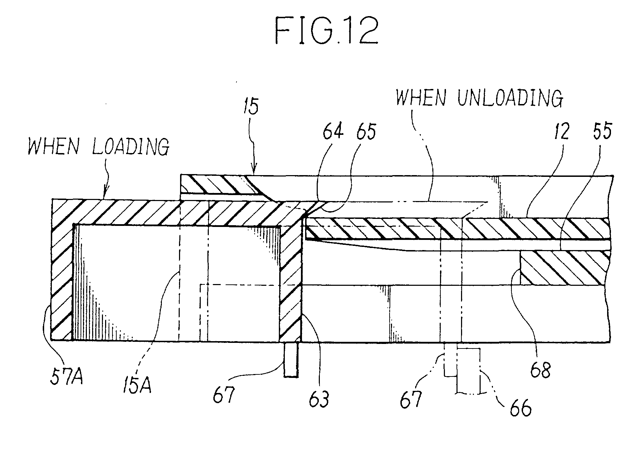

A side regulator 63 and a arc-shaped upper side regulator 64 are positioned on the short side portion 62 as shown in FIG. 12. A portion of the upper edge of the side regulator 63 and the upper side regulator 64 are inserted into an opening 68 made on the disc tray 15 so that they are exposed above the surface of the disc tray 15. The side regulator 63 is formed high enough to be in contact with the circumference of the disc 12. The upper side regulator 64 has an inclined face 65 which is inclined from the upper edge of the side regulator 64 to the inside of the disc place 55, and this regulates the upper side of the disc 12 by being in contact with the upper edge of the disc 12. When the disc tray 15 opens, a lower pin 67 of the side regulator 63 is in contact with a guide plate 66 which is built on the upper side of the middle tray 33 as shown in FIG. 11A and FIG. 12, and thereby, the side regulator 56 and the inclined face 65 of the upper side regulator 64 of the disc regulator 56 are thereby positioned away from the disc 12. In other words, the pin 67 and the guide plate 66 constitute an retracting means for retracting the disc regulator 56 which works as a holding means.

Accordingly, a disc 12 can be easily loaded into and removed from the auto disc changer. In addition, the outside face 57A of the longer side portion 57 of the disc regulator 56 corresponds to the outside face 15A of the disc tray 15, and this improves appearances.

After a user places a disc 12 on the disc area 55, the disc tray 15 is drawn in by an operation of, for example, a push button. At that time, the pin 67 of the disc regulator 56 comes off from the guide plate 66, the side regulator 63 comes in contact with the circumference of the disc 12 which is placed on the disc area 55, and the inclined face 65 of the upper side regulator 64 comes in contact with the upper edge of the disc 12,as shown with the double dotted dash line in FIG. 11B. Accordingly, the side and the upper side of the disc 12 are held in position, and the disc 12 is securely drawn in without falling out of position. When the disc 12 is removed, the operation is similar to the above.

When the disc tray 15 closes and the disc 12 is transferred to the carriage 14, the short side portion 61 of the disc regulator 56 is pressed outward by moving the disc 12 as shown with the solid line in FIG. 11B. Accordingly, the disc regulator 56 is rotated outward against the holding force of the coiled spring 59, thereby allowing the disc 12 to pass between the right and left disc regulators 56.

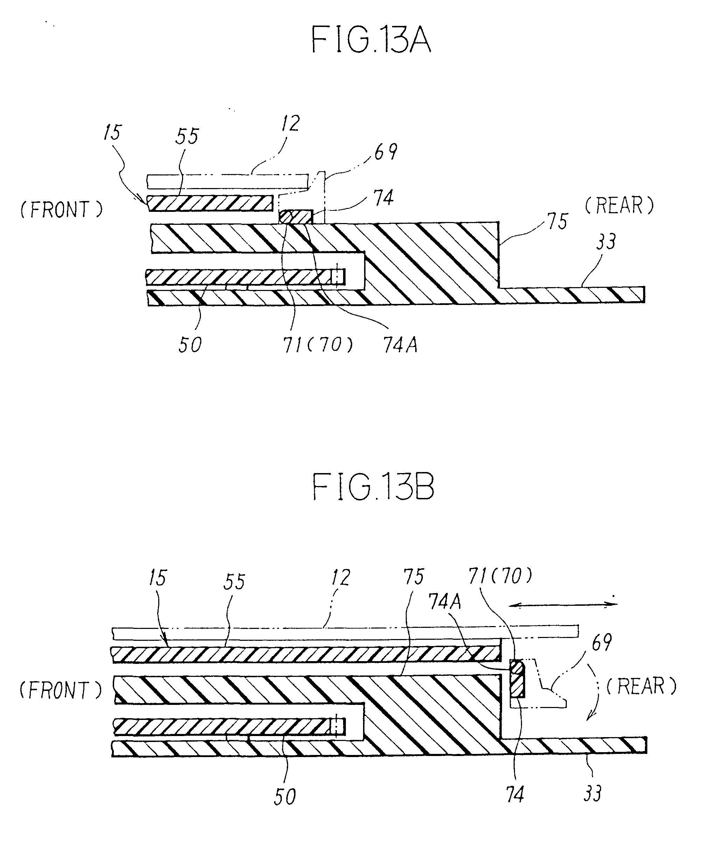

As shown in FIG. 8 and FIG. 9, a stopper 69 is attached at the rear edge of the disc tray 15 in order to prevent the disc 12 from accidentally falling. The stopper 69 is built with an appropriate length, and shafts 70 and 71 made on its both sides are held rotatably by bearings 72 and 73. As shown in FIG. 9, a flat plate portion 74 having the same thickness as the diameter of the shaft 71 and a proper length and width, is positioned on the end of the shaft 71, and its plate face 74A is positioned so as to be in contact with a strip-shaped rotation regulator 75 which projects from the upper side of the middle tray 33. This is also shown in FIG. 13.

When the disc tray 15 is moving or is opened, the plate face 74A of the flat plate portion 74 is in contact with the upper side of the rotation regulator 75 as shown in FIG. 13A, and the stopper 69 is forced into a vertical position. Since the stopper 69 is not opened when the disc 12 presses the stopper 69, the disc 12 is prevented from accidentally falling. On the other hand, when the disc tray 15 is closed, the flat plate portion 74 is positioned away from the rotation regulator 75 as shown in FIG. 13B. Since the shafts 70 and 71 are made at the front edge of the stopper 69,the stopper 69 is rotated clockwise by its weight with the shafts 70 and 71 forming the center. The stopper 69 is retracted from the course through which the disc 12 passes, and this makes it possible to move the disc 12. As described above, since the stopper 69 is opened and closed by the flat plate portion 74 and the rotation regulator 75, the stopper 69 is not opened when the disc 12 is placed on the opened disc tray 15 and therefore, even if the disc 12 is accidentally knocked against the stopper 69, the disc 12 will not fall off.

The carriage 14 is described below with reference to FIG. 4. The carriage 14 is comprised of an upper case 76 and a lower case 77 which are attached with a screw or other means, and various kinds of parts for loading and removing the disc 12 and for moving the carriage 14 up and down, are positioned between them. FIG. 14 shows a construction of the carriage 14. The left side of the upper case 76 and the lower case 77 are formed into arc-shapes, and a rectangular stocker passing opening 81 through which the stocker 13 passes is located at their front half portions of the upper case 76 and lower case 77. Ribs 98 for reinforcement are positioned at the circumferences of the upper and lower cases 76 and 77. A stepping motor 82 is positioned at the right center of the lower case 77, and a first gear 84 is attached to its shaft 83. Rotation of the stepping motor 82 is transmitted via the first gear 84, a second gear 85, a third gear which is built on the second gear 86, and a fourth gear 87, to a fifth gear 88. A worm 89 is built on the lower side of the fifth gear 88, and gears with worm wheels 90 and 91 which are positioned apart from each other at a right angle.

Shafts 92 and 93 are attached to the worm wheels 90 and 91 respectively, and both ends of the shafts 92 and 93 are held rotatably by bearings 94. A pinion 95 is attached to the front end of the shaft 92 which is parallel to the right side of the carriage 14, while pinions 96 and 97 are attached to the right and left ends of the shaft 93 which extends from the right to the left at the center of the carriage 14. These three pinions 95, 96, and 97 gear respectively with racks 78, 79, and 80, which are positioned at the corners of the stocker 13 shown in FIG. 7. Accordingly, when the stepping motor 82 is rotated, the pinions 95, 96, and 97 are rotated and the carriage 14 moves along the longer side of the stocker 13 (vertically). Accordingly, it is possible to load and remove any of the discs 12 into and from the stocker 13 and into and from the disc tray 15. It is also possible to control the carriage 14 to stop at a position for a specific disc which is to be loaded or removed by controlling the rotation number of the stepping motor 82.

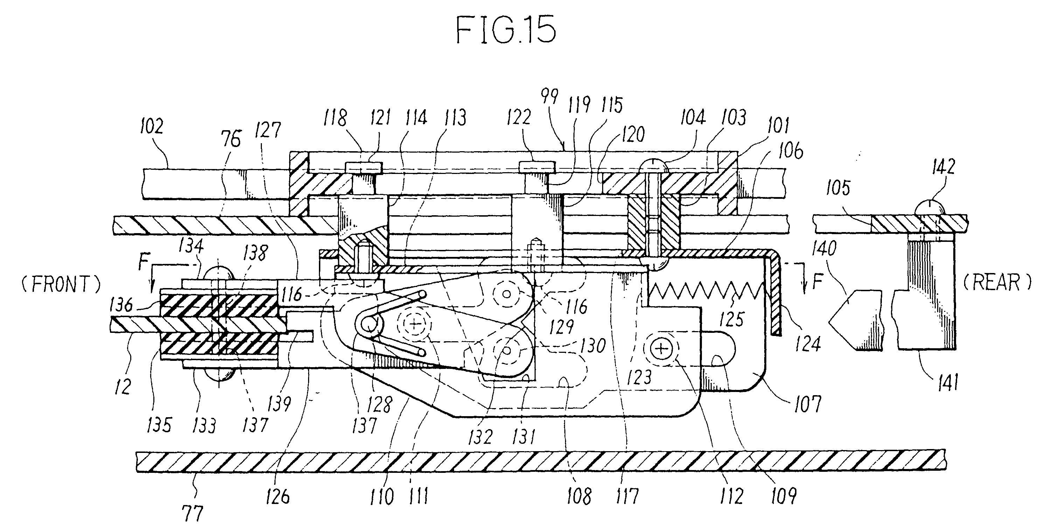

As shown in FIG. 14, the carriage 14 has a disc chuck 99 for transferring the disc 12 to and from the stocker 13 and the disc tray 15, and its moving mechanism 100. In the disc chuck 99, as shown also in FIG. 15, a convex moving plate 101 is positioned on the upper case 76 and is attached to a timing belt 102 from the moving mechanism 100. A column spacer 103 is attached to the underside of the moving plate 101 with a screw 104 and is inserted movably into a straight guide groove 105 which is formed from the center to the right rear edge of the upper case 76. A base plate 106 is fixed under the spacer 103. A side plate 107 is formed downward at one side of the base plate 106. A Y-shape first guide groove 108 is made at the front portion of the base plate 106, and an oblong second guide groove 109 is made at the rear portion of the base plate 106.

A slide plate 110 is positioned slidably at the side of the side plate 107, and guide rollers 111 and 112, which are inserted slidably into each of the guide grooves 108 and 109 of the side plate 107, are attached at the front and the rear of the slide plate 110. An attachment plate 113 is positioned on the slide plate 110, and two column-shape guides 114 and 115 are attached to the upper side of the attachment plate 113 in the front and in the rear with screws 116. The guides 114 and 115 are inserted into an oblong guide groove 117 of the base plate 106 and the guide groove 105 of the upper case 76. Guides 118 and 119 which have diameters less than those of the guides 114 and 115, are inserted into an oblong guide groove 120 of the moving plate 101. Attachments 121 and 122 which have diameters greater than that of the guide groove 120, are positioned on the top of the guides 118 and 119, and the attachment plate 113 and the slide plate 110 are prevented from falling because the attachments 121 and 122 are attached to the moving plate 101.

Since the guide rollers 111 and 112 at the front and the rear of the slide plate 110 are inserted into the first guide groove 108 and the second guide groove 109 at the front and the rear of the side plate 107, the slide plate 110 can move only backwards and forwards with respect to the side plate 107. An attachment portion 123 is positioned on the rear of the slide plate 110, and an attachment portion 124 is also positioned on the rear of the base plate 106. A compression spring is attached to these attachment portions 123 and 124, and the slide plate 110 is always biassed forward with respect to the side plate 107, thereby.

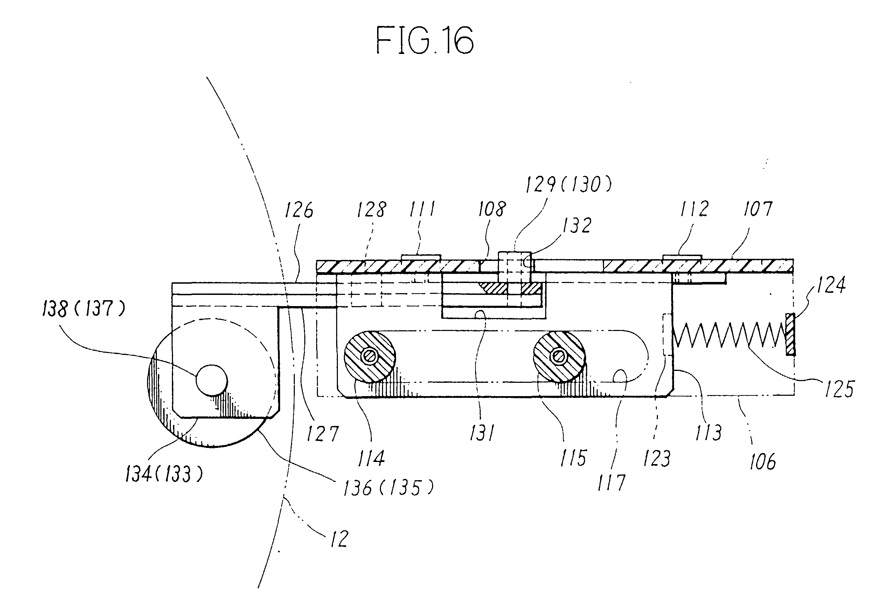

Two chucking levers 126 and 127 are stacked at the side of the slide plate 110, also as shown in FIG. 16, and their approximate centers are attached rotatably to a shaft 128 of the slide plate 110. As shown in FIG. 15, rollers 129 and 130 are attached to the rear edges of the chucking levers 126 and 127 respectively, and are inserted through a hole 131 (FIG. 16) in the slide plate 110 into the Y-shape first guide groove 108 of the side plate 107. The rollers 129 and 130 are positioned respectively at both sides of a dagger-shape projection 132 at the rear edge of the first guide groove 108.

As shown in FIG. 16, flat plate portions 133 and 134 are made at the front edge of the chucking levers 126 and 127 respectively, and disc-shape chucking pads 135 and 136 which are formed of gum, for example, are attached rotatably with centers at the center shafts 137 and 138 to the flat plate portions 133 and 134. An appropriate space between the chucking pads 135 and 138 is retained so that the closed chucking levers 126 and 127 can securely hold the disc 12 and that the opened chucking levers 126 and 127 can completely release the disc 12.

As shown in FIG, 15, a coil spring 137 is wound around the shaft 128, and its one end is hooked behind the shaft 128 at the chucking lever 126 while the other end is hooked behind the shaft 128 at the chucking lever 127. Accordingly, the chucking pads 135 and 136 are biassed toward a closed position. As shown in FIG. 15, when the projection 132 of the side plate 107 is off the rollers 129 and 130 of the chucking levers 126 and 127, the chucking pads 135 and 136 are closed so as to hold the disc 12. The chucking lever 126 has a contact portion 139 for maintaining the position of the disc 12 when chucking it.

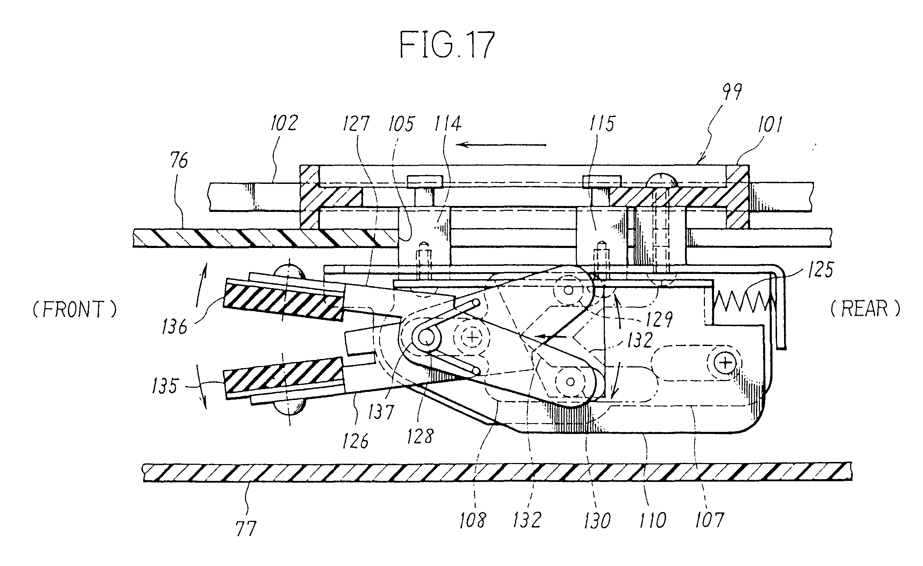

Referring to FIG. 15, when the disc chuck 99 moves forward so that the front guide 114 fixed on the attachment plate 113 comes in contact with the front edge wall of the guide groove 105, the slide plate 110 stops at that position. Further, when the timing belt 102 is rotated in the same direction as before, the moving plate 101 moves as shown in FIG. 17. Simultaneously, the side plate 107 fixed on the moving plate 101 moves forward and the projection 132 of the first guide groove 108 is inserted between the rollers 129 and 130 of the chucking levers 126 and 127, thereby forcing the rollers 129 and 130 to open against the holding force caused by the coil spring 137. Thus, the chucking levers 126 and 127 are rotated in opposite directions to each other with the center at the shaft 128, and the chucking pads 135 and 136 are opened so that the disc 12 is released.

Further, as shown in FIG. 15, a guide plate 141 having a dagger-shaped top 140 similar to the projection 132 of the side plate 107 is attached to the rear of the upper case 76 of the carriage 14 with a screw 142. The top 140 is set at the same height as the projection 132, and when the disc chuck 99 moves backward, the top 140 is inserted between the rollers 129 and 130 of the chucking levers 126 and 127 so as to force them to open. In other words, the chucking pads 135 and 136 are opened at the front end point and the rear end point and are closed while moving.

The disc chuck 99 is attached to the timing belt 102 as described above. The timing belt 102 is positioned along the guide groove 105 of the upper case 76 as shown in FIG. 14, and is wound around pulleys 143 and 144 which are positioned at both ends of the guide groove 105, so that the disc chuck 99 can move along the guide groove 105. A gear 145 is built on the rear pulley 144 and gears with a gear 146. Also, a clutch 147 is mounted on the lower case 77 and a first gear 148 and a second gear 149 are attached to the upper side of the clutch 147. The second gear 149 gears with the gear 146 described above. Rotation of a motor 150 is transmitted via a belt 151 to the clutch 147, which switches to the first gear 148 or the second gear 149. When the disc chuck 99 moves, the rotation is transmitted to the second gear 149.

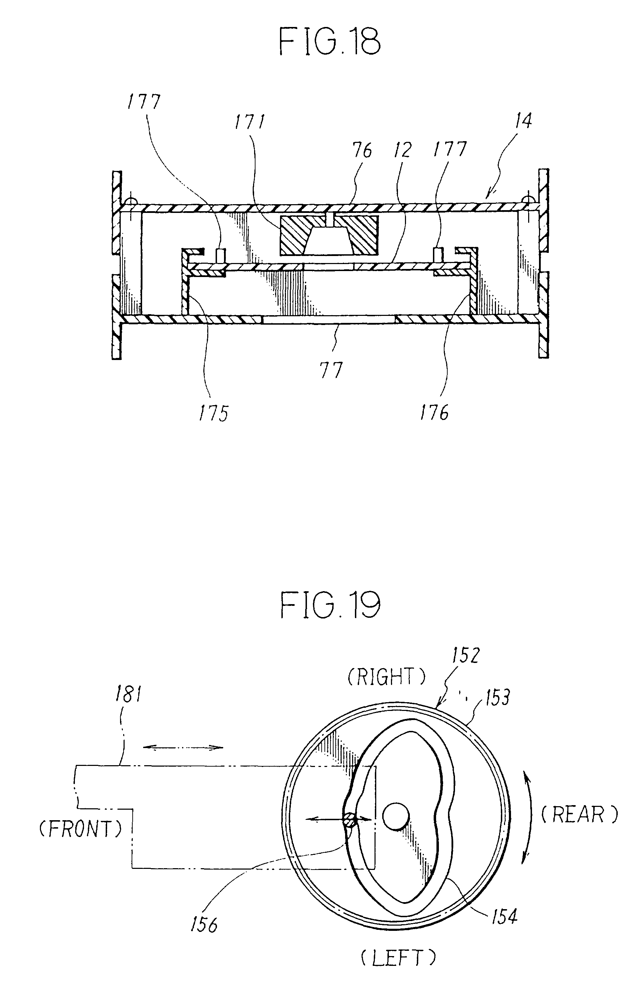

As described above, when the disc chuck 99 releases the disc 12 and moves backward, as shown in FIG. 18, the disc 12 moves on the disc guides 175 and 176 which are made on the lower case 77 of the carriage 14, and the chucking pads 135 and 136 of the disc chuck 99 are opened at a short distance from the storage position in order to fully release the disc 12,so that the disc 12 stops at that position. Thereafter, the disc chuck 99 moves further backward and stops at a position where the chucking pads 135 and 136 do not obstruct the playback operation of the disc 12. The disc 12 is held by a pin 167 of a L-shape lever 162 (FIG. 14), so that the disc 12 is pushed into the storage position and is stopped by contact with a stopper 177, as described below. Further, as shown in FIG. 18, a disc clamper 171 for clamping the disc 12 onto the turntable 169 of the player 16 when the disc 12 is being played, is attached rotatably to the upper case 7.

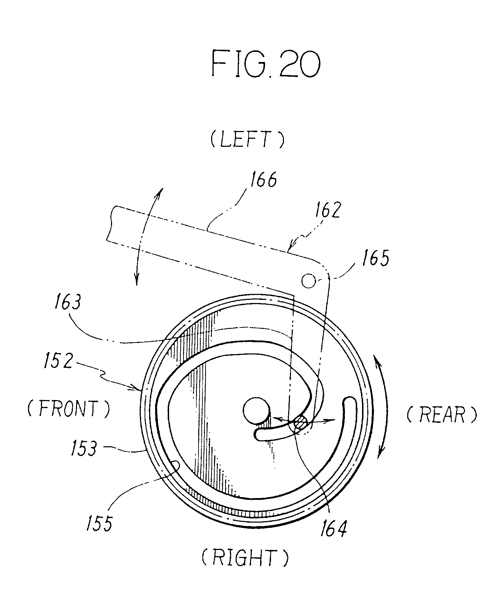

The first gear 148 of the clutch 147 gears with an outer gear 153 which is built on a cam 152. As shown in FIG. 19 and FIG. 20, cam grooves 154 and 155 which are different from each other, are made on the upper and lower sides of the cam 152. The cam groove 154 on the upper side of the cam 152 is formed into a partially crooked ellipse as shown in FIG. 19, and a cam follower 156, which is attached to the rear edge of the slide lever 181, is inserted into the cam groove 154. The slide lever 181 is slender and, as shown in FIG. 14, is positioned along the right side of the carriage 14. The slide lever 181 is attached in such a way as to slide backward and forward using an appropriate guide means (not shown). Accordingly, as shown in FIG. 19, when the cam 152 is rotated, the cam follower 156 moves backward and forward along the cam groove 154 so that the slide lever 181 can slide backward and forward.

As shown in FIG. 14, a hook 157 hooking toward the inside is made at the end of the slide lever 181. Also, an attachment plate 158 is positioned on the right front edge of the carriage 14, and a rotation lever 159 is attached rotatably to the underside of the attachment plate 158 with a center at a pivot 160. The hook 157 described above is attached rotatably to the right edge of the rotation lever 159 with a center at a pin 161. When the slide lever 181 slides forward, the rotation lever 159 is rotated counter-clockwise with a center at the pivot 16. The right end of the rotation lever 159 is positioned so that it can come in contact with the circumference face of the disc 12 in the stocker 13. When the rotation lever 159 is rotated counter-clockwise, the disc 12 is pushed by the end of the rotation lever 159 backward for a predetermined distance from the storage position, as shown in FIG. 14.

The disc 12 is released from the chucking pads 135 and 136 of the disc chuck 99 to a position from which the disc 12 is then pushed. In other words, the disc 12 is released to that position when the disc 12 is removed from the stocker 13 or the disc tray 15, or when it is being transferred back to the stocker 13 or the disc tray 15. Thereafter, the disc 12 is stored at the storage position shown in FIG. 7 and FIG. 14, by the holding force of the disc regulator 56 or the flat spring 24.

Referring to FIG. 20, the cam groove 155 on the underside of the cam 152 is formed into a spiral shape, and the cam follower 164, which is attached to the end of the short rod portion 163 of the L-shape lever 162, is inserted into the cam groove 155. The L-shape lever 162 is attached rotatably to the lower case 77 by a pivot 165, and as shown in FIG. 14, a pin 167 is attached to an end of the long rod portion 166 of the L-shape lever 162. The top of the pin 167 is inserted into the arc-shape guide groove 168 of the upper case 76. The pin 167 is used in order to push the disc 12 transferred back to the carriage 14 by the disc chuck 99, from the position where the transfer is completed to the actual storage position. In other words, as shown in FIG. 20, when the cam 152 is rotated counter-clockwise, as seen from the lower side, the cam follower 164 moves to the front due to the cam groove 155. Accordingly, as shown in FIG. 14, the long rod portion 166 of the L-shape lever is rotated clockwise, and the pin 167 moves in order to push the disc 12 backward from the transferring completed position.

Thus, after the disc 12 is stored in the carriage 14, the carriage 14 moves down to the player 16 when in a playback mode as shown by a double dotted line in FIG. 4. The disc 12 which is stored in the carriage 14 at a specified position, is placed on the turntable 169 of the player 16. At that time, there is a predetermined distance between an optical pickup 170 and the face of the disc 12. The optical pickup 170 can move along the radius of the disc 12. A passing groove (not shown) for the optical pickup 170 is made on the lower case 77 of the carriage 14. The turntable 169 is positioned under the disc area 55 of the disc tray 15, and the disc 12 stored in the disc tray 15 is positioned lower than the other disc 12 set on the turntable 169.

Accordingly, for example, when the disc 12 which is stored in the disc tray 15 is drawn out by the carriage 14 and the carriage 14 moves down, the disc 12 can be placed on the turntable 169. In this situation, when the carriage 14 moves down further for a predetermined distance, the disc clamper 171 which is attached rotatably to the carriage 14, comes in contact with the disc 12 and pushes the disc 12 onto the turntable 169. Accordingly, the disc 12 can be securely clamped to the player 16.

In this auto disc changer 1, as shown by a solid line in FIG. 21, an initializing and standby position for the carriage 14 is set so as to make the height H1 of the disc 12 stored in the disc tray 15, the same as the height H1 of the disc 12 stored in the carriage 14. In an initializing process which is performed when the power is turned on or a power supply outlet is connected, the carriage 14, which is positioned at an unspecified position at that time, moves once to the initializing position. Simultaneously, the former position at which the carriage 14 is positioned, is determined by detecting how many pulses the stepping motor 82 (FIG. 14) is rotated.

Thereafter, when the carriage 14 moves, in order to play the disc 12 in the stocker 13, for example, it is possible to move the carriage 14 to a specified position by managing the number of pulses supplied to the stepping motor 82 after the initializing position. Further, since the initializing position is at the same height as the standby position after the initializing position and the carriage 14 is positioned at the standby position, in other words, at the initializing position, the system can start up quickly even when the power is turned off and then turned back on again.

As described above, in this auto disc changer 1, the initializing position and the standby position for the carriage 14 is set to the same height as the disc tray 15. In order to detect the initializing position, the standby position, and a reference position described later, a sensor using a photo coupler detects the position for the carriage 14 directly without counting the number of pulses of the stepping motor 82. As shown in FIG. 21, the reference position for the carriage 14 is set so that the disc 12 stored in the carriage 14 is set at the same height H1 as the disc 12 stored in the disc tray 15. Accordingly, when the carriage 14 moves during each mode, the carriage 14 always passes through the reference position.

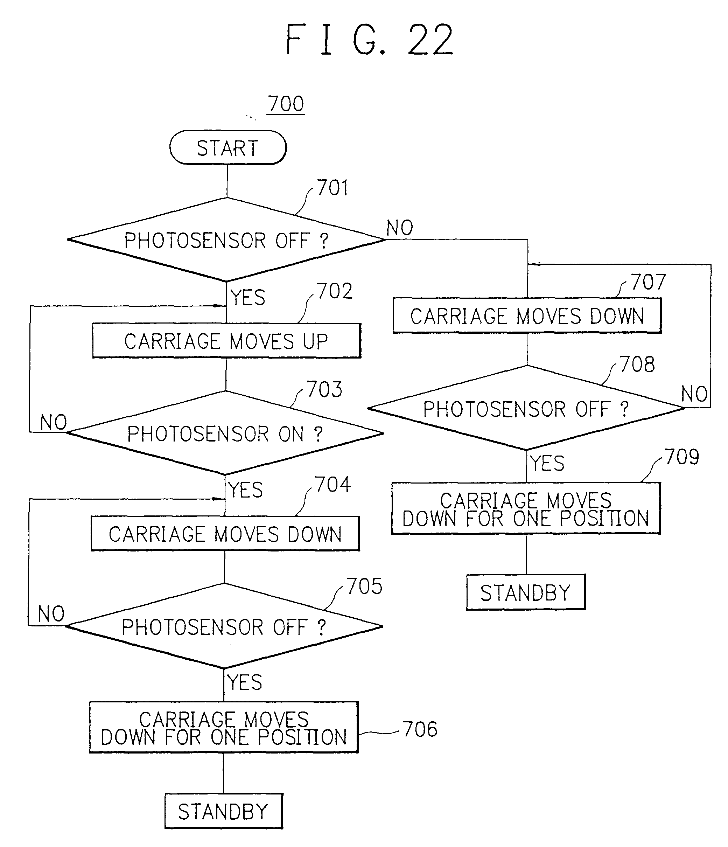

As shown in FIG. 21 and FIG. 22, the reference position H1 for the carriage 14 is detected by a photo sensor 602 which detects a detection portion 601 built on the lower side of the carriage 14 (in step 701).

For example, the carriage 14 receives the disc 12 from the stocker 13, and moves to a playback position or a disc loading and removing position (in step 702). Although a light receiver 603 receives the light emitted from the light emitter 605 of the photo sensor 602 (an ON state) until then, the lower end of the detection portion 601 shuts off the light (an OFF state) (in step 703). The stepping motor 82 is further rotated one position in the same direction so as to move the carriage 14 down (in step 704). At that time, the positions of the photo sensor 602 and the detection portion 601 are determined so as to set the position of the carriage 14 as the reference position H1.

Accordingly, if the carriage 14 is not positioned at the reference position (the standby position, or the initializing position, in this case) for some reason at the time the power is turned on; for example, it is determined that the carriage 14 is positioned above the reference position when the photo sensor 60 is detected in the ON state. Similarly, if the photo sensor 602 is detected in the OFF state, the carriage 14 is determined to be positioned at the reference position or below the reference position (in step 705).

Thereafter, the stepping motor 82 is rotated based on such determination. It is detected that the photo sensor 602 is changed from the ON state to the OFF state as described above. At that time, the stepping motor 82 is further rotated for one position (in step 706), so that the carriage 14 is set to the reference position, and thus, initializing process can be performed. In step 701, when it is determined that the photo sensor 602 is in the ON state, a process similar to step 704 to 706 is performed (in steps 707 to 709).

FIG. 23 shows the range and manner by which the carriage 14 moves. For example, if the standby position for the carriage 14 is set at the same level as the disc tray 15 (FIG. 21) when disc 12 is stored in the stocker 13, the carriage 14 is positioned in range B. The disc 12 is drawn out from the disc tray 15 and is stored in the carriage 14. The carriage 14 moves to range A and the disc 12 is drawn out from the carriage 14 and stored in a predetermined position in the stocker 13. Thereafter, the carriage 14 moves to range B and remains on standby. When the disc 12 is removed from the stocker 13 and the auto disc changer, the operation is performed in the reverse order as that described above.

When the unspecified disc 12 in the stocker 13 is played back, the carriage 14 moves up from range B of the standby position to range A, and the disc 12 is removed from the stocker 13. The carriage 14 moves down to range C, passing through the reference position of range B. At that point, the disc 12 is placed on the turntable 169 and the carriage 14 moves down, to which point the disc 12 is clamped by the disc clamper 171 of the carriage 14. In this situation, the player 16 plays the disc 12. When the playback is completed, the carriage 14 moves up to range A, passing through the reference position in range B. After the disc 12 is stored in the original position in the stocker 13, the carriage 14 moves to the standby position in range B.

When the external disc 12 is played back, the carriage 14 draws out, from the standby position in range B, the disc 12 which is stored in the disc tray 15, and thereafter moves down to range C, where the clamping and playback of the disc 12 are performed in a fashion similar to the above. When the playback is completed, the carriage 14 returns to the standby position in range B, where the disc 12 is transferred to the disc tray 15 and the carriage 14 is still on standby.

As described above, it is understood that the carriage 14 passes through the reference position in range B in all of the modes. Because the auto disc changer 1 controls the movement of the carriage 14 by managing the number of pulses supplied to the stepping motor 82, the number of supplied pulses is cleared at the reference position so that the reference position of the carriage 14 is confirmed in each mode. Accordingly, even if the auto disc changer 1 is used continuously for a long time or if noise causes a malfunction of a counter for the number of pulses, the position of the carriage 14 remains accurate because an accumulation of errors does occur. Further, because the reference position is in the middle of the normal operation, it is not necessary that the carriage 14 moves to a specified position as in the prior art. Accordingly, the auto disc changer 1 can be miniaturized, and there is no time loss when moving the carriage 14. Moreover, because the initializing position, the standby position, and the reference position are set at the same height, the position detection sensor for the carriage 14 is used throughout, and the number of parts used can thereby be decreased.

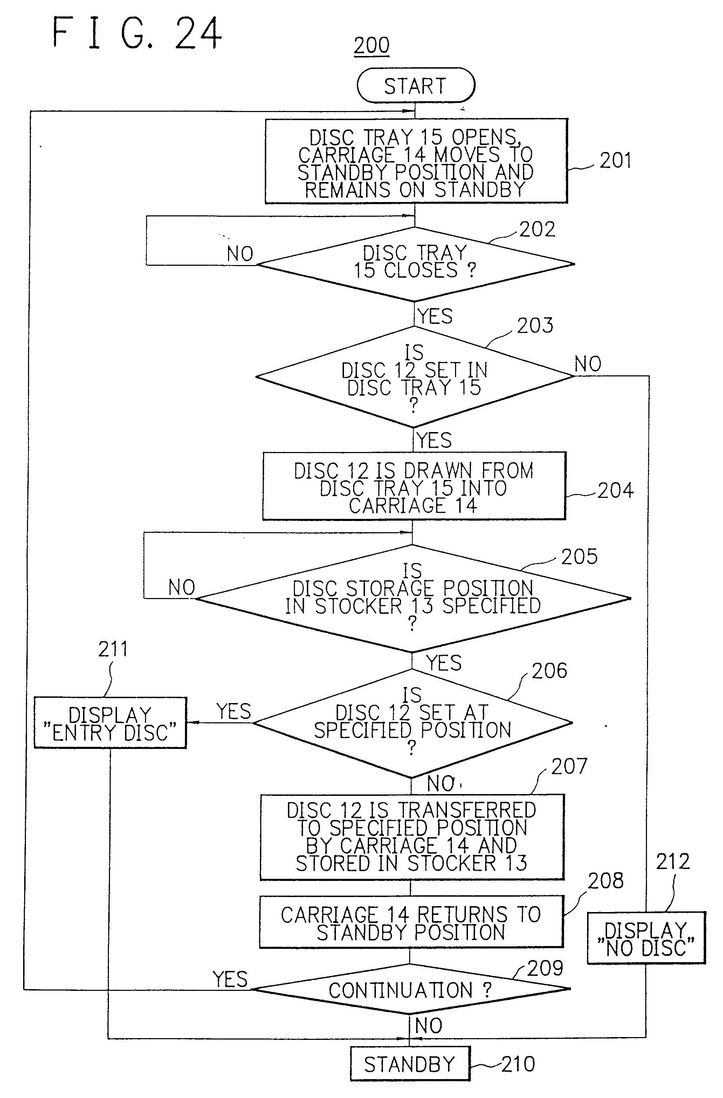

The operations for each mode in the auto disc changer 1 are described below. When in a disc storage mode for storing the disc 12 into the stocker 13, as seen in FIG. 24, the disc tray 15 opens and the carriage 14 moves to the standby position and remains on standby (in step 201). In this situation, a user places a disc 12 on the disc tray 15 and then closes it. A determination is made whether the disc tray 15 is closed or not, and when closed, a determination is made whether or not a disc 12 is placed on the disc tray 15 (in steps 202 and 203). When it is determined that the disc 12 is placed in the disc tray 15, the disc 12 is drawn from the disc tray 15 into the carriage 14 (in step 204).

Subsequently, a determination is made whether or not the disc position is specified, and when it is specified, a determination is made whether or not the disc 12 is set in the specified position (in steps 205 and 206). When it is determined that the disc 12 is not appropriately set in step 206, the carriage 14 moves to the predetermined position in order to store the disc 12 (in step 207). Thereafter, the carriage 14 returns to the standby position, where a determination is made whether or not the disc storing operation is to be continued (in steps 208 and 209). When it is continued, the disc tray 15 opens in step 201, and the operation described above is thereafter repeated. When it is not continued, the carriage 14 stays on standby (in step 210).

When it is determined in step 206 that the disc 12 is set in the specified position, the display 19 indicates that there is a disc 12 (in step 211), and stays on standby (in step 210). When it is determined in step 203 that the disc 12 is not set in the disc tray 15, the display 19 indicates that no disc 12 has been placed (in step 212), and stays on standby in step 210.

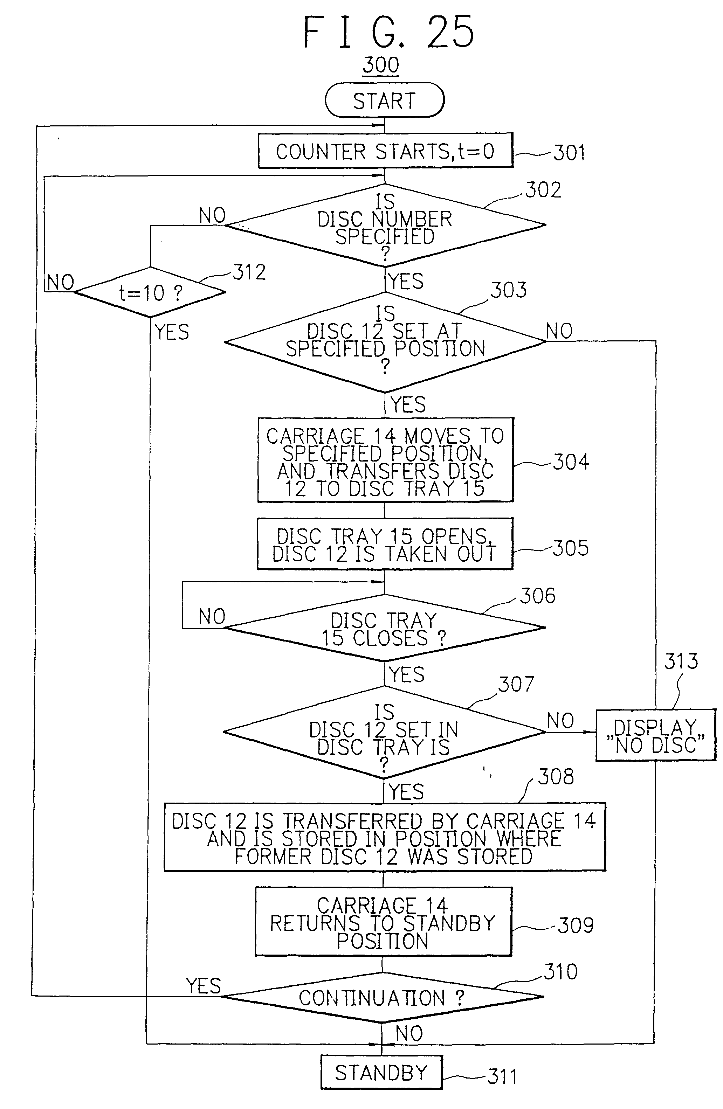

Referring to FIG. 25, in a disc exchange mode in which the disc 12 in the stocker 13 is exchanged, the timer is reset to "0" and the count starts, and a determination is made whether or not the disc number for the disc 12 in the stocker 13 to be exchanged is specified (in steps 301 and 302). When the disc number is specified, a determination is made whether or not the disc 12 is set in the specified position, and when the disc 12 is so set, the carriage 14 moves to the specified position, draws out the disc 12, and transfers it to the disc tray 15 (in steps 303 and 304). The disc tray 15 opens, and the user takes out the disc 12 (in step 305). Thereafter, the user places the disc 12 on the disc tray 15 and closes it. A determination is made whether or not the disc tray 15 is closed, and when it is closed, a determination is made whether or not the disc 12 is set in the disc tray 15 (in steps 306 and 307). When the disc 12 is so set, it is drawn out by the carriage 14, is carried to the position where the former disc 12 was set in the stocker 13, and is stored at that position (in step 308).

Subsequently, the carriage 14 returns to the standby position (in step 309), and a determination is made whether or not the disc exchange operation is to be continued (in step 310).When the operation is not continued, the carriage 14 stays on standby as is (in step 311). When the operation is continued, the timer is reset in step 301, and an operation similar to the above is repeated. On the other hand, when it is determined in step 302 that the disc number is not specified, a determination is made whether or not the timer clocks 10 minutes (in step 312), and when it does clock 10 minutes, the carriage 14 stays on standby (in step 311). When it is determined in step 303 that the disc 12 is not set at the specified position and when it is determined in step 307 that a disc 12 is not set in the disc tray 15, the display 19 indicates that there is no disc 12 (in step 313), at which point the carriage 14 stays on standby in step 311.

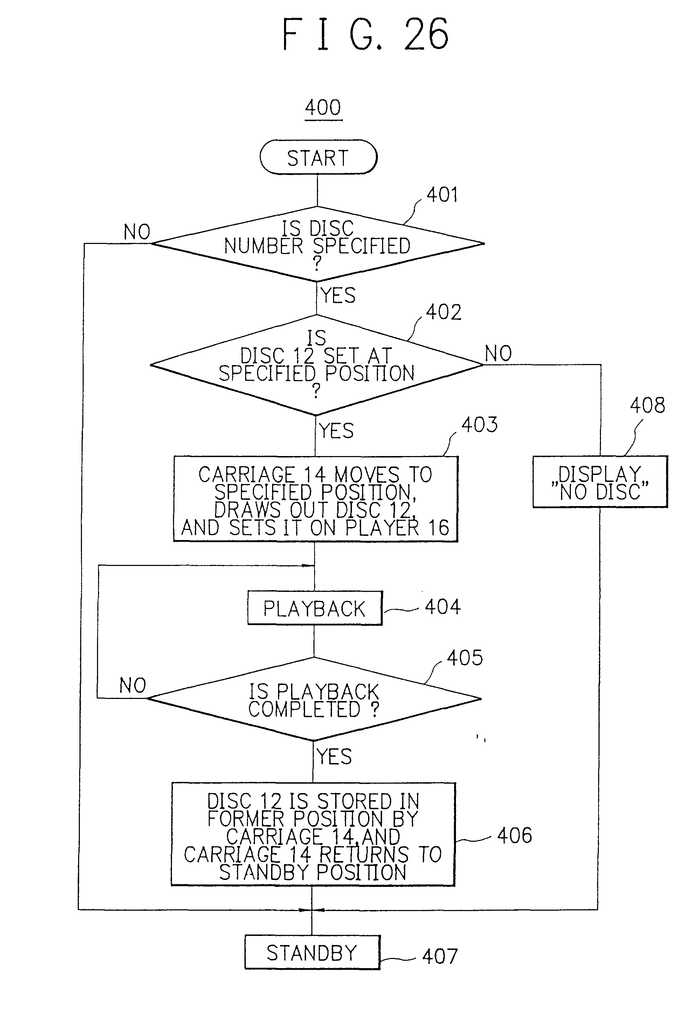

Referring to FIG. 26, in a disc-in-stocker playback mode in which the disc 12 in the stocker 13 is played back, a determination is made whether or not the disc number for the disc 12 to be played is specified, and when it is specified, a determination is made whether or not the disc 12 is set in the specified position (in steps 401 and 402). When it is determined that the disc 12 is so set, the carriage 14 moves to the specified position, draws out the disc 12, and sets it on the player 16 (in step 403). In such situation, the disc 12 is played, and a determination is made whether or not the playback is completed (in steps 404 and 405). When the playback is completed, the carriage 14 transfers the disc 12 to the former position, returns to the standby position, and stays on standby (in steps 406 and 407).

When it is determined in step 401 that the disc number is not specified, the carriage 14 waits on standby for a command. When it is determined in step 402 that the disc 12 is not set in the specified position, the display 19 indicates that no disc 12 has been placed (in step 408) and the carriage 14 stays on standby in step 407.

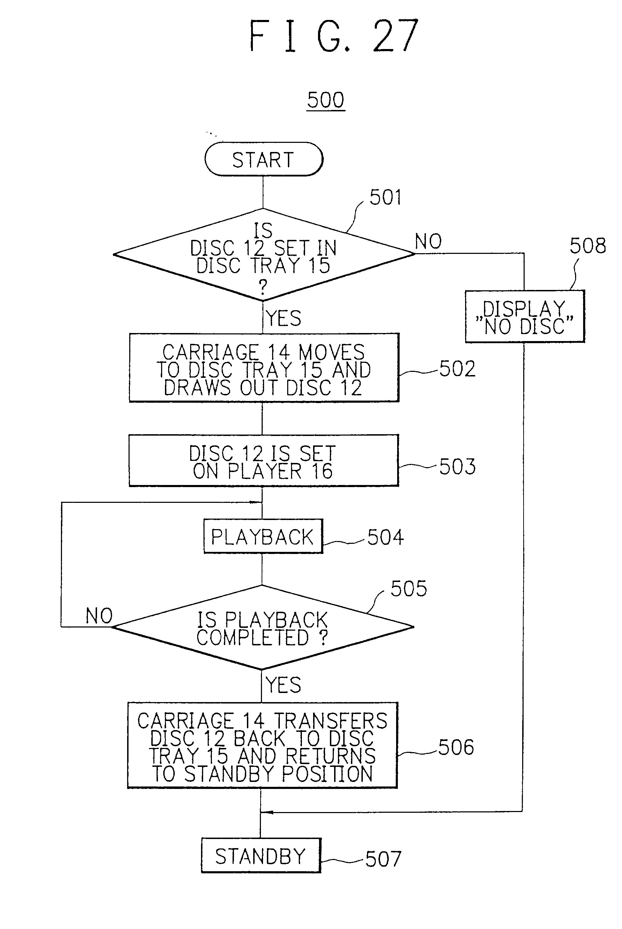

Referring to FIG. 27, in an external disc playback mode in which an directly loaded disc 12 is played, a determination is made whether or not a disc 12 is set in the disc tray 15 (in step 501), and when a disc 12 is so set, the carriage 14 moves from the standby position to the position of the disc tray 15 and draws out the disc 12 (in step 502). The carriage 14 moves down, and the disc 12 is set on the player 16, which performs the playback (in steps 503 and 504).

Subsequently, a determination is made whether or not the playback is completed (in step 505), and when it is completed, the carriage 14 moves up, transfers the disc 12 back to the disc tray 15 (in step 506), and returns to the standby position, where it stays on standby (in step 507). When in step 501 a disc 12 is not set in the disc tray 15, the display indicates that the no disc 12 has been placed (in step 508), and the carriage 14 stays on standby in step 507. Although it is not shown in the chart but is mentioned in the description for FIG. 21, when the carriage 14 passes through or stays at the standby position, the counter for the stepping motor is cleared.

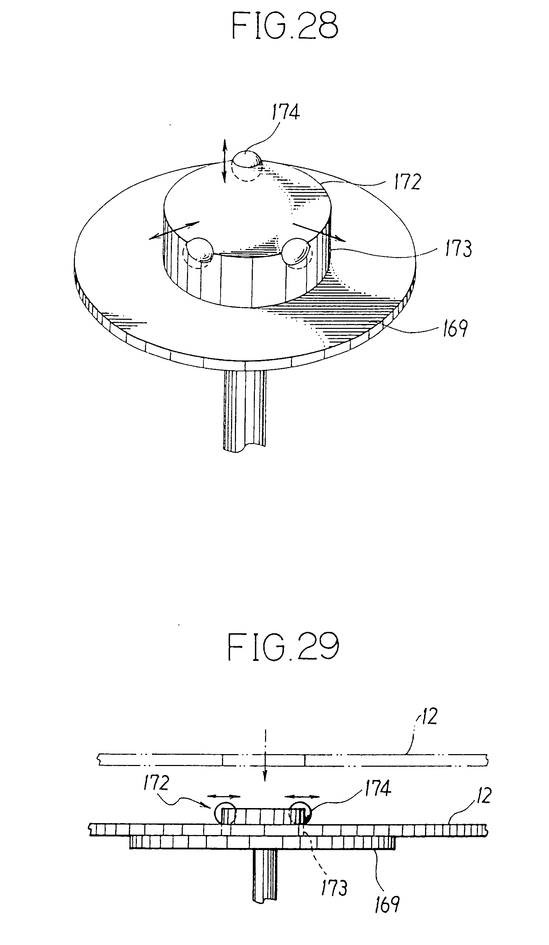

In the embodiment described above, although the disc 12 which is placed on the turntable 169 of the player 16 is clamped by the disc clamper 171 of the carriage 14, it can also be clamped by a ball clamp 172 built on the turntable 169 as shown in FIG. 28. In the case of a ball clamp 172, a trunk 173, the diameter of which is equal to that of the center hole of the disc 12 is positioned on the upper side of the turntable 169, and a number of balls 174, three for example, are attached to its circumference so that they can move in and out and are biassed to move forward.

Referring to FIG. 29, when the disc 12 is pressed to the upper side of the balls 174, the balls 174 are forced to move to the inside by the edge of the center hole of the disc 12, so that the disc 12 is placed on the turntable 169. At that time, the balls are forced to move out so that parts of the balls are in contact with the upper side of the disc 12. Accordingly, the disc 12 is securely clamped. By using the ball clamp 172, it is not necessary for the disc clamper 171 to press the disc 12,and this makes it possible for the carriage 14 to be more simply constructed and miniaturized.

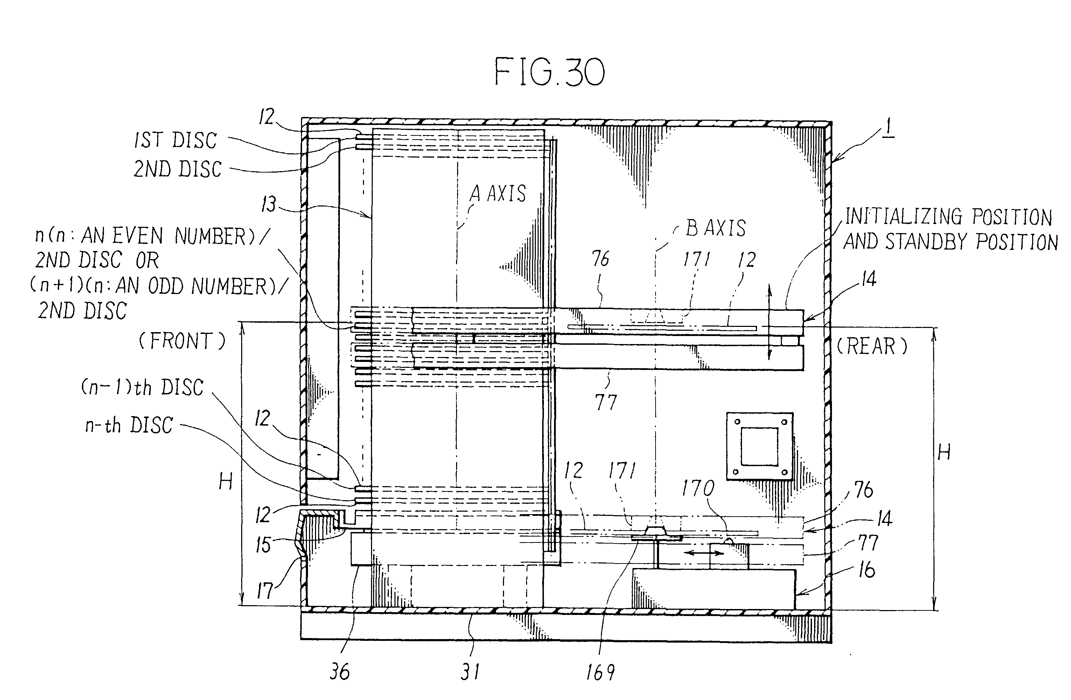

Referring to FIG. 30, it is possible that the initializing position and the standby position for the carriage 14 to be set so that the disc 12 positioned at the middle of all discs 12 in the stocker 13 is set at a height H equal to the disc 12 which is stored in the carriage 14.

In other words, if the stocker 13 can store n discs and n is an even number, the initializing position and the standby position are set so that the height H of the n/2nd disc 12 is set at the same height H as that for the disc 12 stored in the carriage 14. If n is an odd number, the level of the (n+1)/2nd disc 12 is set at the height H of the disc 12 in the carriage 14. Accordingly, both the time required for the carriage 14 to move to a position in order to load or remove, for example, the first disc 12 into or from the stocker 13 (the access time) and the time required for it to move to a position in order to load and remove the n-th disc 12, will be the shortest possible time.

The disc tray 15 and its moving mechanism can be positioned above the stocker 13, and in such case, the initializing position and the standby position for the carriage 14 may be set in accordance with the disc tray 15, in a fashion similar to the above description.

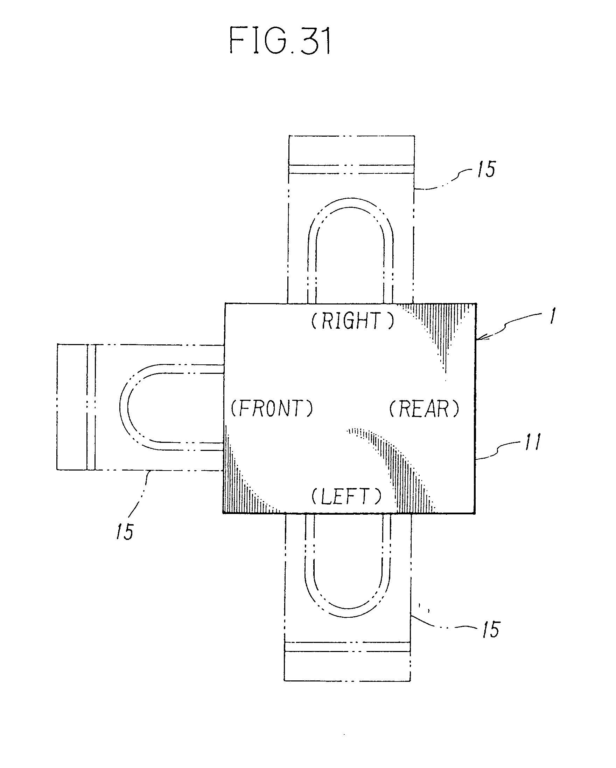

Although in the embodiment described above the disc tray 15 is drawn forward, in other words, to the front side, the disc tray 15 can be constructed so as to be drawn out in any direction in which it does not collide with the carriage 14 as shown in FIG. 31; in other words, in the left and right directions. The direction in which the disc tray 15 is drawn out can be designed according to the design of the auto disc changer 1 itself. Further, although in the embodiment the discs 12 are piled up vertically, the present invention is applicable to an auto disc changer in which the discs are arranged horizontally.

As described above, an auto disc changer according to the present invention is comprised of a disc storage means (stocker) for storing a number of discs with their centers positioned on the first axis (A axis), a disc removing and loading means (disc tray) for removing said discs from and loading said discs into the auto disc changer, a disc player means (player) for playing back the disc, a disc carriage means (carriage) having modes for transporting the disc between the disc storage means, the disc removing and loading means and the playing means, and driving means for driving the disc carriage means, whereby a reference position for the disc carriage means is positioned within a range of movement through which the disc carriage means must pass in every mode in which the disc carriage means moves, and a number of pulses supplied to the driving means are cleared at the reference position so that the position of the disc carriage means is adjusted to the reference position in each mode.

According to the present invention, because the position of the disc carriage means is adjusted with respect to the reference position every time the disc carriage means moves, the position of the carriage 14 can be adjusted immediately if it deviates for some reason. Because it is unnecessary to move the disc carriage means outside of its normal range, time is saved and the range over which the disc carriage moves is shortened, thereby allowing the unit to be built smaller.

According to the present invention, since the disc playing means is fixed, the construction of the unit it simpler, the unit can be built smaller and less expensively, and the playback operation is more stable.

Accordingly, because it is not necessary to repeat the detection of the position of the disc carriage means, it is possible to decrease the number of parts, to make the control simple, and to lower costs.

It will be obvious to those having skill in the art that many changes may be made in the above-described details of the preferred embodiment of the present invention. The range of the present invention, therefore, should be determined by the following claims.

## Claims

1. An auto disc changer comprising:
disc storage means (13) for storing a plurality of discs (12);
disc removing and loading means (15) for removing said discs (12) from and loading said discs into said auto disc changer (1);
disc playing means (16) for playing said disc;
disc carriage means (14) having modes for transporting said disc (12) between said disc storage means (13), said disc removing and loading means (15) and said playing means (16); and
driving means (88) for driving the disc carriage means (14);
the auto disc changer being **characterized in that**:
a reference position for said disc carriage means (14) is positioned within a range of movement through which said disc carriage means (14) must pass in every mode in which said disc carriage means (14) moves; and
a number of pulses supplied to said driving means (88) are cleared at the reference position so that the position of the disc carriage means (14) is adjusted to said reference position in each mode.

2. The auto disc changer in accordance with claim 1, wherein said disc removing and loading means (15) is positioned between said disc playing means (16) and said disc storage means (13) , and said reference position for said disc carriage means (14) is set at a position where said disc (12) is transferred to and from a disc area (55) of said disc removing and loading means (15).

3. The auto disc changer in accordance with claim 1, wherein a disc setting portion of said disc playing means (16) is set in accordance with the position of said disc area (55) of said disc removing and loading means (15), and said reference position for said disc carriage means (14) is set at a position where said disc (12) is transferred to and from a disc area (55) of said disc removing and loading means (15).

4. The auto disc changer in accordance with claim 1, wherein said reference position for said disc carriage means (14) is set at the same position as an initializing position and a standby position for said disc carriage means (14).

## Patentansprüche

1. Automatischer Plattenwechsler, der aus
Plattenlagerungsmitteln (13) zur Lagerung einer Vielzahl von Platten (12),
Plattenentnahme- und Plattenbeschickungsmitteln (15) zur Entnahme der besagten Platten aus und Beschickung der besagten Platten in den besagten automatischen Plattenwechsler,
Plattenabspielmitteln (16) zum Abspielen der besagten Platten,
Plattenträgermitteln (14), die über Betriebsarten zum Transport der besagten Platten (12) zwischen den besagten Plattenlagerungsmitteln (13), den besagten Plattenentnahme- und Plattenbeschickungsmitteln (15) und den besagten Abspielmitteln (16) und
aus Antriebsmitteln (88) zum Antrieb der Plattenträgermittel (14) besteht, wobei der automatische Plattenwechsler **dadurch gekennzeichnet ist, dass**
eine Referenzposition für besagte Plattenträgermittel (14) innerhalb eines Bewegungsbereichs positioniert wird, den die besagten Plattenträgermittel (14) in jeder Betriebart durchlaufen müssen, in dem sich die besagten Plattenträgermittel (14) bewegen;
eine Anzahl von Pulsen, die den besagten Antriebsmitteln (88) zugeleitet werden, bei der Referenzposition freigegeben werden, so dass die Position der Plattenträgermittel (14) der besagten Referenzposition in jeder Betriebsart angepasst wird.

2. Automatischer Plattenwechsler in Übereinstimmung mit Anspruch 1, wobei die besagten Plattenentnahme- und Plattenbeschickungsmittel (15) zwischen den besagten Plattenabspielmitteln (16) und den besagten Plattenlagerungsmitteln (13) positioniert wird, und die besagte Referenzposition für die besagten Plattenträgermittel (14) wird an einer Position eingestellt, wo die besagte Platte (12) zu und von einem Plattenbereich (55) der besagten Plattenentnahme- und Plattenbeschickungsmittel (15) befördert wird.

3. Automatischer Plattenwechsler in Übereinstimmung mit Anspruch 1, wobei ein Platteneinstellteil der besagten Plattenabspielmittel (16) in Übereinstimmung mit der Position des Plattenbereichs (55) der besagten Plattenentnahme- und Plattenbeschickungsmittel (15) eingestellt wird, und die besagte Referenzposition für die besagten Plattenträgermittel (14) wird an einer Position eingestellt, an der die besagte Platte (12) zu und von einem Plattenbereich (55) der besagten Plattenentnahme- und Plattenbeschickungsmittel (15) befördert wird.

4. Automatischer Plattenwechsler in Übereinstimmung mit Anspruch 1, wobei die besagte Referenzposition für die besagten Plattenträgermittel (14) an derselben Position als eine Ausgangsposition und eine Bereitschaftsposition für die besagten Plattenträgermittel (14) eingestellt wird.

## Revendications

1. Changeur automatique de disque comprenant :
un moyen de stockage de disques (13) destiné au stockage d'une pluralité de disques (12) ;
un moyen de retrait et de chargement (15) destiné au retrait desdits disques (12) depuis et au chargement desdits disques dans le changeur automatique de disque (1) ;
un moyen de lecture de disque (16) destiné à la lecture dudit disque ;
un moyen chariot de disque (14) présentant des modes de transport dudit disque (12) entre ledit moyen de stockage de disques (13), ledit moyen de retrait et de chargement de disque (15) et ledit moyen de lecture de disque (16) ; et
un moyen de pilotage (88) destiné à piloter le moyen chariot de disque (14) ;
le changeur automatique de disques étant **caractérisé en ce que** :
une position de référence dudit moyen chariot de disque (14) est positionnée dans un intervalle de mouvement dans lequel ledit moyen chariot de disque (14) doit passer par chacun des modes dans lesquels se déplace le moyen chariot de disque (14) ; et
un certain nombre d'impulsions appliquées audit moyen de pilotage (88) sont réinitialisées dans la position de référence de telle sorte que la position du moyen chariot de disque (14) soit ajustée sur ladite position de référence pour chaque mode.

2. Changeur automatique de disque selon la revendication 1 dans lequel ledit moyen de retrait et de chargement de disque (15) est positionné entre ledit moyen de lecture de disque (16) et ledit moyen de stockage de disque (13) et ladite position de référence dudit moyen chariot de disque (14) est fixée à une position dans laquelle ledit disque (12) est transféré vers et depuis une zone de disque (55) dudit moyen de retrait et de chargement de disque (15).

3. Changeur automatique de disque selon la revendication 1 dans lequel une partie de positionnement de disque dudit moyen de lecture de disque (16) est fixée en fonction de la position de ladite zone de disque (55) dudit moyen de retrait et de chargement de disque (15) et ladite position de référence dudit moyen chariot de disque (14) est fixée à une position dans laquelle ledit disque est transféré vers et depuis une zone de disque (55) dudit moyen de retrait et de chargement de disque (15).

4. Changeur automatique de disque selon la revendication 1 dans lequel ladite position de référence dudit moyen chariot de disque (14) est établie dans une position identique à une position d'initialisation et à une position de repos dudit moyen chariot de disque.
